# EUROPEAN PATENT APPLICATION

(11) **EP 4 439 697 A1**
(43) Date of publication of application: **02.10.2024**
(21) Application number: 24166088.5
(22) Date of filing: 25.03.2024
(51) Int. Cl.: H01M 4/13, H01M 4/139, H01M 4/02

(54) **DRY ELECTRODE FILM, AND DRY ELECTRODE AND LITHIUM BATTERY INCLUDING THE SAME**

(30) Priority: 26.03.2023 KR 20230039367; 08.06.2023 KR 20230073743
(71) Applicant: Samsung SDI Co., Ltd., Yongin-si, Gyeonggi-do 17084 (KR)
(72) Inventor: BANG, Youmin, 17084 Yongin-si (KR); LEE, Jinhyon, 17084 Yongin-si (KR); NAM, Hyun, 17084 Yongin-si (KR); KWON, Seunguk, 17084 Yongin-si (KR); PYUN, Ahram, 17084 Yongin-si (KR); KWON, Ilkyong, 17084 Yongin-si (KR); YOON, Yeonhee, 17084 Yongin-si (KR); LEE, Donggeun, 17084 Yongin-si (KR); KIM, Seongdae, 17084 Yongin-si (KR); CHOI, Jongsup, 17084 Yongin-si (KR)
(74) Representative: Marks & Clerk LLP

(57) **Abstract**

A dry electrode film, and a dry electrode and a lithium battery, including the same, are provided, the dry electrode film including a first region having a first side surface provided at one end of a width direction perpendicular to a thickness direction of the dry electrode film and including a first dry electrode active material layer, a second region having a second side surface opposite to the first side surface and including a second dry electrode active material, and a third region provided between the first region and the second region and including a third dry electrode active material, wherein the third region has a third porosity less than a first porosity of the first region and a second porosity of the second region.

## Description

### BACKGROUND

### 1. Field

According to one or more embodiments, the present disclosure relates to a dry electrode film, a dry electrode including the dry electrode film and a lithium battery including the dry electrode film.

### 2. Description of the Related Art

In accordance with miniaturization and higher performance of one or more suitable devices, it has become important for lithium batteries to have higher energy density as well as increased miniaturization and weight reduction. For example, a lithium battery having a relatively high capacity has become increasingly important.

In the manufacture of electrodes from a slurry containing solvent, the utilization of an excess of solvent is unavoidable. Therefore, it is desirable to provide a dry method for preparing a relatively high capacity lithium battery which excludes such utilization of organic solvents.

### SUMMARY

One or more aspects are directed toward a dry electrode film which has improved electrolyte immersion properties by having increased porosity on at least one side, e.g., on both (e.g., opposite) sides, (e.g., of the dry electrode film).

One or more aspects include a dry electrode including the dry electrode film.

One or more aspects include a lithium battery including the dry electrode.

Additional aspects will be set forth in part in the description which follows and, in part, will be apparent from the description, or may be learned by practice of the presented embodiments of the present disclosure.

According to one or more embodiments,
a dry electrode film includes
a first region which has a first side surface provided (e.g., disposed) at one end of a width direction perpendicular to a thickness direction of the dry electrode film and includes a first dry electrode active material (e.g., first dry electrode active material layer),
a second region which has a second side surface opposite to (e.g., facing oppositely away from) the first side surface and includes a second dry electrode active material, and
a third region which is provided (e.g., disposed) between the first region and the second region and includes a third dry electrode active material,
wherein a third porosity of the third region is smaller than each of a first porosity of the first region and a second porosity of the second region.

According to one or more embodiments, a dry electrode includes
a dry electrode active material layer, and
an electrode current collector provided on (e.g., disposed on) a first (e.g., one) side of the dry electrode active material layer, or provided (e.g., disposed) between the first (e.g., one) side and a second (e.g., an other) side opposite to the first (e.g., one) side,
wherein the dry electrode active material layer includes the dry electrode film.

According to one or more embodiments, a lithium battery includes
a cathode, an anode, and
an electrolyte provided (e.g., disposed) between the cathode and the anode,
wherein at least one of the cathode and/or the anode is a dry electrode, and
the dry electrode includes the dry electrode film.

At least some of the above and other features of the invention are set out in the claims.

### BRIEF DESCRIPTION OF THE DRAWINGS

The described and other aspects, features, and advantages of certain embodiments of the present disclosure will be more apparent from the following description taken in conjunction with the accompanying drawings, in which:
FIG. 1 is a cross-sectional view of a dry electrode film according to one or more embodiments of the present disclosure;
FIG. 2 is a perspective view of a dry electrode film according to one or more embodiments of the present disclosure;
FIG. 3 is a schematic diagram showing a porosity according to location in a width direction of a dry electrode film according to one or more embodiments of the present disclosure;
FIG. 4 is a cross-sectional view showing a step of a dry electrode film according to one or more embodiments of the present disclosure;
FIG. 5 is a schematic diagram showing a porosity according to location in a width direction of a dry electrode film according to one or more embodiments of the present disclosure;
FIG. 6 is a schematic diagram showing a porosity according to location in a width direction of a dry electrode film according to one or more embodiments of the present disclosure;
FIG. 7 is a schematic diagram showing a porosity gradient according to location in a width direction of a dry electrode film according to one or more embodiments of the present disclosure;
FIG. 8 is a schematic diagram showing a porosity gradient according to location in a width direction of a dry electrode film according to one or more embodiments of the present disclosure;
FIG. 9 is a cross-sectional view of a dry electrode film according to one or more embodiments of the present disclosure;
FIG. 10 is a cross-sectional view of a dry electrode film according to one or more embodiments of the present disclosure;
FIGS. 11A and 11B are cross-sectional views of a dry electrode according to one or more embodiments of the present disclosure;
FIG. 12 is a schematic diagram of a dry electrode film according to one or more embodiments of the present disclosure;
FIGS. 13A-13F are plan views of a dry electrode according to one or more embodiments of the present disclosure;
FIG. 14 is a cross-sectional view of a dry electrode according to one or more embodiments of the present disclosure;
FIG. 15 is a side view of a dry electrode assembly according to one or more embodiments of the present disclosure;
FIG. 16 is a side view of a dry electrode assembly according to one or more embodiments of the present disclosure;
FIG. 17 is a front view of a dry electrode assembly according to one or more embodiments of the present disclosure;
FIG. 18 is a schematic diagram showing a method of preparing a dry electrode film according to one or more embodiments of the present disclosure;
FIG. 19 is a schematic diagram of a lithium battery according to one or more embodiments of the present disclosure;
FIG. 20 is a schematic diagram of a lithium battery according to one or more embodiments of the present disclosure;
FIG. 21 is a schematic diagram of a lithium battery according to one or more embodiments of the present disclosure; and
FIG. 22 is a cross-sectional scanning electron microscope (SEM) image of the dry electrode film prepared in Example 1, including a fibrillized dry binder in a machine direction.

### DETAILED DESCRIPTION

Reference will now be made in more detail to embodiments, examples of which are illustrated in the accompanying drawings, wherein like reference numerals refer to like elements throughout, and duplicative descriptions thereof may not be provided. In this regard, the present embodiments may have different forms and should not be construed as being limited to the descriptions set forth herein. Accordingly, the embodiments are merely described, by referring to the drawings, to explain aspects of the present description. As utilized herein, the term "and/or" includes any and all combinations of one or more of the associated listed items. Expressions such as "at least one of," if (e.g., when) preceding a list of elements, modify the entire list of elements and do not modify the individual elements of the list.

The present disclosure, which will be more fully described hereinafter, may have one or more suitable variations and one or more suitable embodiments, and specific embodiments will be illustrated in the accompanied drawings and described in greater detail in the detailed description. However, the present disclosure should not be construed as being limited to specific embodiments set forth herein. Rather, these embodiments are to be understood as encompassing all variations, equivalents, or alternatives included in the scope of the present disclosure.

The terminology utilized hereinbelow is utilized for the purpose of describing particular embodiments only and is not intended to limit the present disclosure. As utilized herein, the singular forms are intended to include the plural forms as well, unless the context clearly indicates otherwise. Unless otherwise defined, all chemical names, technical and scientific terms, and terms defined in common dictionaries should be interpreted as having meanings consistent with the context of the related art, and should not be interpreted in an ideal or overly formal sense. It will be understood that, although the terms first, second, etc. may be used herein to describe various elements, these elements should not be limited by these terms. These terms are only used to distinguish one element from another element. Thus, a first element could be termed a second element without departing from the teachings of the present disclosure. Similarly, a second element could be termed a first element.

As utilized herein, the terms "including," "includes," "include," "having," "has," "have," "comprises," "comprise," and/or "comprising" specify the presence of stated features, regions, integers, steps, operations, elements, components, ingredients, materials, or combinations thereof, but do not preclude the presence or addition of one or more other features, regions, integers, steps, operations, elements, components, ingredients, materials, or combinations thereof. As utilized herein, "/" may be interpreted as "and", or as "or" depending on the context.

In the drawings, the thicknesses of layers and regions may be exaggerated for clarity of description. Like reference numerals denote like elements throughout, and duplicative descriptions thereof may not be provided the specification. Throughout the specification, if (e.g., when) a component, such as a layer, a film, a region, or a plate, is described as being "above" or "on" another component, the component may be directly above the another component, or there may be yet another component therebetween. It will be understood that although the terms "first," "second," and/or the like may be utilized herein to describe one or more suitable elements, these elements should not be limited by these terms. These terms are only utilized to distinguish one element from another element. The described terms are utilized only to distinguish one component from another. Components having substantially the same functional configuration in the present specification and drawings are denoted by the same reference numerals, and redundant descriptions thereof will not be provided.

The term "combination thereof may include a mixture, a laminate, a complex, a copolymer, an alloy, a blend, a reactant of constituents.

As used herein, singular forms such as "a," "an," and "the" are intended to include the plural forms as well, unless the context clearly indicates otherwise.

As used herein, the terms "use," "using," and "used" may be considered synonymous with the terms "utilize," "utilizing," and "utilized," respectively.

As used herein, expressions such as "at least one of," "one of," and "selected from," if (e.g., when) preceding a list of elements, modify the entire list of elements and do not modify the individual elements of the list. For example, the expressions "at least one of a to c," "at least one of a, b or c," and "at least one of a, b and/or c" may indicate only a, only b, only c, both (e.g., simultaneously) a and b, both (e.g., simultaneously) a and c, both (e.g., simultaneously) b and c, all of a, b, and c, or variations thereof.

As used herein, the term "and/or" includes any and all combinations of one or more of the associated listed items.

The term "may" will be understood to refer to "one or more embodiments of the present disclosure," some of which include the described element and some of which exclude that element and/or include an alternate element. Similarly, alternative language such as "or" refers to "one or more embodiments of the present disclosure," each including a corresponding listed item.

Spatially relative terms, such as "beneath," "below," "lower," "above," "upper," "bottom," "top," and the like, may be used herein for ease of description to describe one element or feature's relationship to another element(s) or feature(s) as illustrated in the drawings. It will be understood that the spatially relative terms are intended to encompass different orientations of the device in use or operation in addition to the orientation depicted in the drawings. For example, if the device in the drawings is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

In this context, "consisting essentially of" means that any additional components will not materially affect the chemical, physical, optical or electrical properties of the semiconductor film.

Further, in this specification, the phrase "on a plane," or "plan view," means viewing a target portion from the top, and the phrase "on a cross-section" means viewing a cross-section formed by vertically cutting a target portion from the side.

### Definitions

As utilized herein, the term "dry" refers to a state deliberately not in contact with solvents, e.g., processing solvents, or a state deliberately devoid of solvents. For example, the term "dry conductive material" refers to a conductive material deliberately not in contact with solvents, or a conductive material deliberately devoid of any solvents. For example, the term "dry binder" refers to a binder deliberately not in contact with solvents, or a binder deliberately devoid of any solvents. For example, a binder that does not mix with solvent and is liquid at room temperature may be referred to as dry binder.

As utilized herein, the length of an electrode, the thickness of an electrode, the width of an electrode, the length of an electrode, the width of a first region, the width of a second region, and the width of a third region refer to the average length, the average thickness, the average diameter, the average depth, and the average area, respectively. An average value is an arithmetic refer to of values measured at multiple points, for example. The length of an electrode, the thickness of an electrode, the width of an electrode, the width of a first region, the width of a second region, and the width of a third region may be measured from micrometers, scanning electron microscope images, or optical microscope images.

In the present application, the term "particle diameter" of a particle refers to an average particle diameter if (e.g., when) the particle is spherical, and refers to an average major axis length if (e.g., when) the particle is non-spherical. The particle diameter of particles may be measured utilizing a particle size analyzer (PSA). The term "particle diameter" of particles may refer to an average diameter of the particles, for example. The average particle diameter may be, for example, a median particle diameter (D50). The median particle diameter (D50) refers to a particle size corresponding to a cumulative volume of 50 vol% as counted from the smallest particle size in a particle size distribution measured by a laser diffraction method. In some embodiments, "average particle diameter" may be measured by software or manually from a scanning electron microscope (SEM) image or a transmission electron microscope (TEM) image. Also, depending on context, when particles are spherical, "diameter" indicates a particle diameter or an average particle diameter, and when the particles are non-spherical, the "diameter" indicates a major axis length or an average major axis length.

The "aspect ratio" used herein may refer to the average aspect ratio and may be determined from SEM images.

In certain context, the terms "fibril" or "fibrils" as utilized herein refer to one or more discrete individual units of a substance in fiber form. As utilized herein and in certain context, the terms "fibrillized" and "fibrillize" refer to a process of aligning at least a portion of fibers of a substance along a longitudinal direction of the fibers utilizing a mixer.

As utilized herein, the term "metal" refers to both (e.g., simultaneously) metals and metalloids such as silicon and germanium, in an elemental or ionic state.

As utilized herein, the term "alloy" refers to a mixture of two or more metals.

As utilized herein, the term "cathode active material" refers to a cathode material capable of undergoing lithiation and delithiation.

As utilized herein, the term "anode active material" refers to an anode material capable of undergoing lithiation and delithiation.

As utilized herein, the term "lithiation" or "to lithiate" refers to a process of adding lithium to a cathode active material or an anode active material.

As utilized herein, the term "delithiation" or "to delithiate" refers to a process of removing lithium from a cathode active material or an anode active material.

As utilized herein, the term "charging" or "to charge" refers to a process of providing electrochemical energy to a battery.

As utilized herein, the term "discharging" or "discharge" refers to a process of removing electrochemical energy from a battery.

As utilized herein, the terms "positive electrode" and "cathode" refer to an electrode at which electrochemical reduction and lithiation take place during a discharging process.

As utilized herein, the terms "negative electrode" and "anode" refer to an electrode at which electrochemical oxidation and delithiation take place during a discharging process.

Hereinbelow, a dry electrode film according to embodiments, and a dry electrode and a lithium battery including the same, will be described in greater detail.

A dry electrode film according to one or more embodiments includes: a first region having a first side surface (e.g., left side surface) provided at one end of a width direction perpendicular to a thickness direction of the dry electrode film, and including a first dry electrode active material; a second region having a second side surface (e.g., right side surface) opposite to the first side surface and including a second dry electrode active material; and a third region provided between the first region and the second region and including a third dry electrode active material, wherein the third region has a third porosity that is less than a first porosity of the first region and less than a second porosity of the second region.

In a dry electrode film in the related art, if (e.g., when) the thickness of the dry electrode film increases, the electronic conduction and/or ionic conduction path from the surface of the dry electrode film to the interior of the dry electrode film becomes longer. Due to including such elongated electronic conduction path and/or ionic conduction path, the internal resistance of the dry electrode film may increase, and the reversibility of electrode reactions may decrease. Consequently, the cycling performance, for example, high-rate capability of a lithium battery including such a dry electrode film having increased thickness may drastically deteriorate.

In this context, a dry electrode film disclosed herein shows a higher porosity at both (e.g., simultaneously) side-surface regions thereof, compared to a porosity of the central region of the dry electrode film. A dry electrode film having increased thickness, by having such increased porosity at the side-surface regions, may facilitate the impregnation of electrolyte from the surface of the dry electrode film to the interior of the dry electrode film. Therefore, despite the increased length of the electronic conduction and/or ionic conduction path from the surface of the dry electrode film to the interior of the dry electrode film, the contact area between the electrolyte and the dry electrode film increases, and thus, it is possible to suppress or reduce the increase of internal resistance of the dry electrode film and improve reversibility of electrode reactions. Consequently, in a lithium battery including the dry electrode film disclosed herein, even if (e.g., when) employing a dry electrode film with increased thickness, it may be possible to suppress or reduce deterioration in the cycling performance, for example, high-rate capability of the lithium battery.

Hereinbelow, a dry electrode film according to embodiments will be described with reference to the accompanied drawings.

### Dry Electrode Film

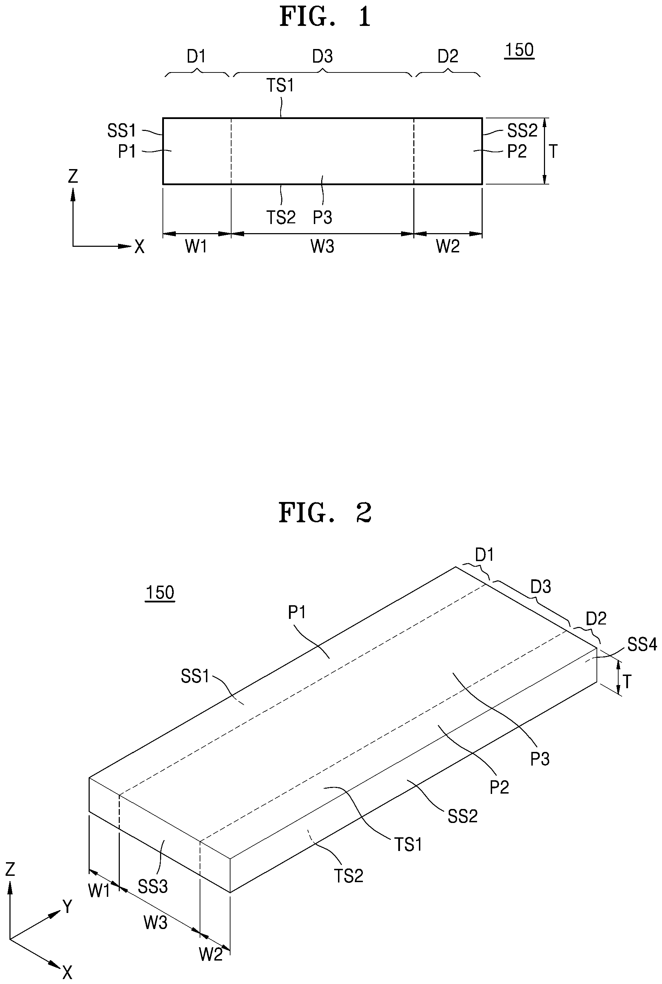

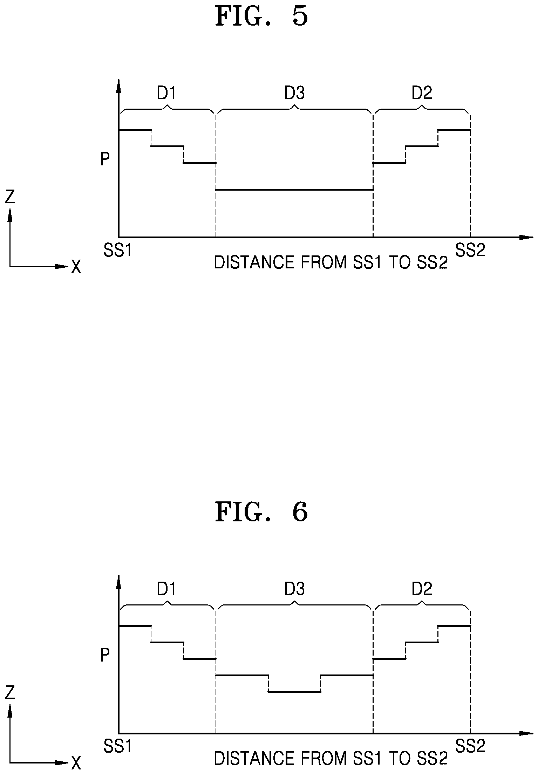

Referring to FIGS. 1 to 3, a dry electrode film 150 may have a first side surface SS1 (e.g., left side surface in FIG. 1) provided at one end of a width direction (e.g., X) perpendicular to a thickness direction (e.g., Z) of the dry electrode film 150 and includes a first region D1 including a first dry electrode active material. The dry electrode film includes a second side surface SS2 (e.g., right side surface in FIG. 1) opposite to the first side surface SS1 and includes a second region D2 including a second dry electrode active material. The dry electrode film 150 may include a third region D3 provided between the first region and the second region D2 and including a third dry electrode active material. A third porosity P3 of the third region D3 may be less than a first porosity P1 of the first region D1 and less than a second porosity of the second region D2. Because the third porosity P3 of the central region of the dry electrode film 150 is less than the first porosity P1 of the first region D1 including the first side surface SS1 and less than the second porosity P2 of the second region D2 including the second side surface SS2, the electrolyte may more easily penetrate into the interior of the dry electrode film 150. The electrolyte immersion properties of the dry electrode film 150 may improve. Therefore, a lithium battery including the dry electrode film 150 may have improved cycling performance, for example, high-rate capability. Porosity may be calculated from, for example, weight, volume, thickness, and/or the like, of each region. In some embodiments, porosity may be calculated from cross-sectional scanning electron microscope images of the respective regions. In some embodiments, the first porosity P1 of the first region D1 may be (substantially) the same as the second porosity of the second region D2. In some embodiments, at least one of the first region D1, second region D2 and/or third region D3 may have a constant porosity within the respective regions; for example, the third region D3 may have a constant porosity within the third region D3; or each of the first region D1, second region D2 and third region D3 may have a constant porosity within the respective regions. In other embodiments, at least one of the first region D1, second region D2 and/or third region D3 may have a stepped porosity or porosity gradient within the respective regions (to be described later in relation to FIGS. 5 to 8). For example, a third porosity P3 of the third region D3 may be 95 % or less, 90 % or less, 85 % or less or 80 % or less of a first porosity P1 of the first region D1. For example, a third porosity P3 of the third region D3 may be 10 % to 95 %, 30 % to 90 %, 50 % to 85 % or 70 % to 80 % of a first porosity P1 of the first region D1. For example, a third porosity P3 of the third region D3 may be 95 % or less, 90 % or less, 85 % or less or 80 % or less of a second porosity of the second region D2. For example, a third porosity P3 of the third region D3 may be 10 % to 95 %, 30 % to 90 %, 50 % to 85 % or 70 % to 80 % of a second porosity P2 of the second region D2.

Referring to FIGS. 1 and 2, in the dry electrode film 150, the first region D1 may have a first width W1 from the first side surface SS1 to a first interface between the first region D1 and the third region D3. The second region D2 has a second width (W2) from said second side (SS2) to a second interface between said second region D2 and the third region D3. The third region D3 may have a third width (W3) between the first interface and the second interface. In one or more embodiments, the third width (W3) of the third region D3 may be greater than each of the first width (W1) of the first region D1 and the second width (W2) of the second region D2. Because the third region D3 having low porosity has the third width W3 that is greater than each of the first width W1 of the first region D1 and the second width W2 of the second region D2, each having higher porosity, energy density of the dry electrode film 150 may improve. In one or more embodiments, the third width W3 of the third region D3 may be smaller than, for example, each of the first width W1 of the first region D1 and the second width W2 of the second region D2. In one or more embodiments, the third width W3 of the third region D3 may be, for example, about 70 % to about 99 %, or about 80 % to about 99 % with respect to each of the first width W1 of the first region D1 and the second width W2 of the second region D2. Because the third region D3 having low porosity has a third width W3 less than each of the first width W1 of the first region D1 and the second width W2 of the second region D2, impregnation of the electrolyte of the dry electrode film 150 may be more easily attained (e.g., carried out).

Referring to FIGS. 1 and 2, in the dry electrode film 150, the third width W3 of the third region D3 may be about 30 % to about 95 %, about 30 % to about 90 %, about 35 % to about 90 %, about 40 % to about 90 % (e.g. about 50 % to about 90 %, about 60 % to about 90 %, or about 70 % to about 90 %), about 40 % to about 80 %, or about 50 % to about 70 %, with respect to the total width of the dry electrode film 150. The first width W1 of the first region D1 may be about 2.5 % to about 35 %, about 5 % to about 35 %, about 5 % to about 32.5 %, about 5 % to about 30 % (e.g. about 5 % to about 25 %, about 5 % to about 20 %, or about 5 % to about 15 %), about 10 % to about 30 %, or about 15 % to about 25 %, with respect to the total width of the dry electrode film 150. The second width W2 of the second region D2 may be about 2.5 % to about 35 %, about 5 % to about 32.5 %, about 5 % to 35 %, about 5 % to about 30 % (e.g. about 5 % to about 25 %, about 5 % to about 20 %, or about 5 % to about 15 %), about 10 % to about 30 %, or about 15 % to about 25 %, with respect to the total width of the dry electrode film 150. In some embodiments, the first width W1 of the first region D1 may be (substantially) the same as the second width W2 of the second region D2. With the first region D1, the second region D2, and the third region D3, each having a width in the described ranges, a lithium battery including the dry electrode film 150 may have further improved cycling performance. If (e.g., when) the third width W3 of the third region D3 is excessively large, the effect of the dry electrode film 150 being easily impregnated with electrolyte may become insufficient. If (e.g., when) the third width W3 of the third region D3 is excessively small, the energy density of the dry electrode film 150 may deteriorate.

In some embodiments, the third width W3 of the third region D3 may be greater than the first width W1 of the first region D1 and greater than the second width W2 of the second region D2. For example, the third width W3 of the third region D3 may be about 35 % to about 90 %, and the first width W1 of the first region D1 and the second width W2 of the second region D2 may each be about 5 % to about 32.5 %; the third width W3 of the third region D3 may be about 40 % to about 90 %, and the first width W1 of the first region D1 and the second width W2 of the second region D2 may each be about 5 % to about 30 % (e.g. the third width W3 of the third region D3 may be about 50 % to about 90 %, and the first width W1 of the first region D1 and the second width W2 of the second region D2 may each be about 5 % to about 25 %; the third width W3 of the third region D3 may be about 60 % to about 90 %, and the first width W1 of the first region D1 and the second width W2 of the second region D2 may each be about 5 % to about 20 %; the third width W3 of the third region D3 may be about 70 % to about 90 %, and the first width W1 of the first region D1 and the second width W2 of the second region D2 may each be about 5 % to about 15 %); the third width W3 of the third region D3 may be about 40 % to about 80 %, and the first width W1 of the first region D1 and the second width W2 of the second region D2 may each be about 10 % to about 30 %; or the third width W3 of the third region D3 may be about 50 % to about 70 %, and the first width W1 of the first region D1 and the second width W2 of the second region D2 may each be about 15 % to about 25 %; with respect to the total width of the dry electrode film 150.

In other embodiments, the third width W3 of the third region D3 may be less than the first width W1 of the first region D1 and less than the second width W2 of the second region D2. For example, the third width W3 of the third region D3 may be about 10 % to about 30 %, and the first width W1 of the first region D1 and the second width W2 of the second region D2 may each be about 35 % to about 45 %; or the third width W3 of the third region D3 may be about 20 % to about 30 %, and the first width W1 of the first region D1 and the second width W2 of the second region D2 may each be about 35 % to about 40 %; with respect to the total width of the dry electrode film 150.

Referring now to FIGS. 1 and 2, in the dry electrode film 150, the first width W1 of the first region D1 and/or the second width W2 of the second region D2 may (each) be greater than a thickness T of the dry electrode film 150. Because the first width W1 of the first region D1 and/or the second width W2 of the second region D2 is (each) greater than a thickness T of the dry electrode film 150, even the dry electrode film 150 with an increased thickness may be easily impregnated in the electrolyte.

The ratio W1/T of the first width W1 of the first region D1 to the thickness T of the dry electrode film 150 may be, for example, about 10 to about 10,000, about 10 to about 1,000, or about 10 to about 100. The ratio W2/T of the first width W2 of the second region D2 to the thickness T of the dry electrode film 150 may be about 10 to about 10,000, about 10 to about 1,000, or about 10 to about 100. With the first width W1 of the first region D1 and/or the second width W2 of the second region D2 having a ratio in the described ranges with respect to the thickness T of the dry electrode film 150, a lithium battery including the dry electrode film 150 may have further improved cycling performance. If (e.g., when) the described ratio is excessively small, it may be difficult for the dry electrode film 150 to be easily impregnated in the electrolyte. If (e.g., when) the described ratio is excessively large, the energy density of the dry electrode film 150 may deteriorate.

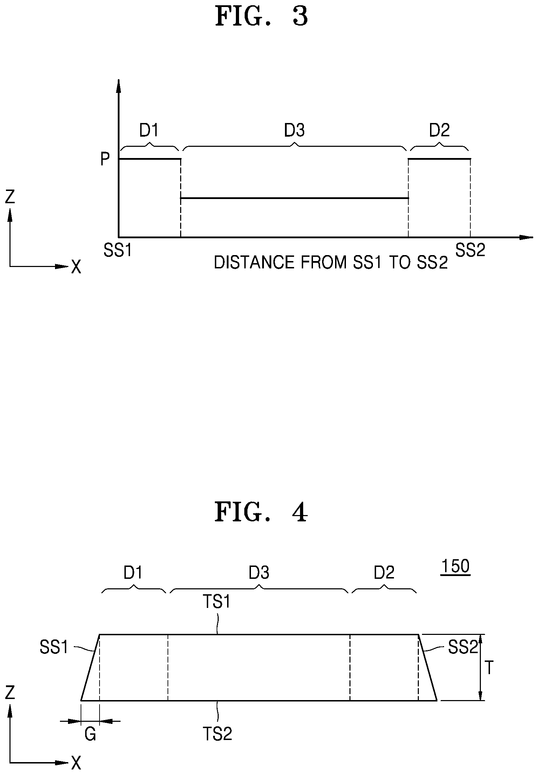

Referring to FIG. 4, a dry electrode film 150 may include a first top surface TS1 (e.g., topmost surface in FIG. 4) provided at one end of a thickness direction of the dry electrode film 150, and a second top surface TS2 (e.g., bottommost surface in FIG. 4) opposite to the first top surface TS1. A step G between a first point of contact between the first top surface TS1 and the first side surface SS1 in a width direction (e.g., X) of the dry electrode film 150, and a second point of contact between the second top surface TS2 and the first side surface SS1 may be 30 % or less, 25 % or less, 20 % or less, 15 % or less, 10 % or less, 5 % or less, or 3 % or less, with respect to a thickness T of the dry electrode film 150. The step G between the first point of contact and the second point of contact in the width direction (e.g., X) of the dry electrode film 150 may be about 0.1 % to about 30 %, about 0.1 % to about 25 %, about 1 % to about 20 %, 1 % to about 15 %, about 1 % to about 10 %, about 1 % to about 5 % or about 1 % to about 3 % with respect to the thickness T of the dry electrode film 150. Because the side surfaces of the dry electrode film 150 have these reduced steps, it may be possible to more effectively prevent or reduce a short circuit between the electrodes during cycling of the lithium battery.

The dry electrode film 150 may be manufactured by a dry method, for example, by rolling, and in this case, the steps on the side surfaces of the dry electrode film 150 may be small. The side surfaces of the dry electrode film 150 may intersect the first top surface TS1 and/or the second top surface TS2 of the dry electrode film 150 at an angle that is close to a normal angle. In one or more embodiments, even if (e.g., when) the thickness of the dry electrode film 150 increases, the step G between the points where the side surface SS1 of the dry electrode film 150 contacts the first top surface TS1 and the second top surface TS2 in a width direction may be 30 % or less with respect to the thickness T of the dry electrode film 150.

In some embodiments, regarding a wet electrode active layer which is prepared by coating a slurry onto an electrode collector, for example, if (e.g., when) the thickness of a wet electrode active material layer increases, the steps at side surfaces of the wet electrode active material layer may increase due to the slurry sloughing off of the side surfaces. Thus, the step G between a point of contact between the first side surface SS1 of the dry electrode film 150 and the first top surface TS1, and a point of contact between the first side surface SS1 of the dry electrode film 150 and the second top surface TS2 in a width direction, may be more than 30 % with respect to the thickness T of the dry electrode film 150. As the step at the side surfaces of the wet electrode active material layer increases, the likelihood of a short circuit occurring between the electrodes during cycling of the lithium battery may increase.

Referring to FIGS. 5 and 6, in a dry electrode film 150, the porosity (e.g., of the dry electrode film) may decrease in a stepwise manner in a direction from the first side surface SS1 or the second side surface SS2 to the interface between the first region D1 and the third region D3, and/or the interface between the second region D2 and the third region D3. With the dry electrode film 150 having such a porosity gradient, the dry electrode film 150 may be more easily impregnated in the electrolyte.

Referring to FIG. 5, the porosity (e.g., of the dry electrode film) may decrease in a stepwise manner, for example, in a width direction from the first side surface SS1 of the first region D1 to a first interface between the first region D1 and the third region D3. In one or more embodiments, the porosity (e.g., of the dry electrode film) may decrease in a stepwise manner, for example, in a width direction from the second side surface SS2 of the second region D2 to the second interface between a second region D2 and the third region D3.

Referring to FIG. 6, the porosity (e.g., of the dry electrode film) may decrease in a stepwise manner, for example, in a width direction from the first side surface SS1 of the first region D1 to the center of the third region D3. In one or more embodiments, the porosity (e.g., of the dry electrode film) may decrease in a stepwise manner in the width direction from the second side surface SS2 of the second region D2 to the center of the third region D3.

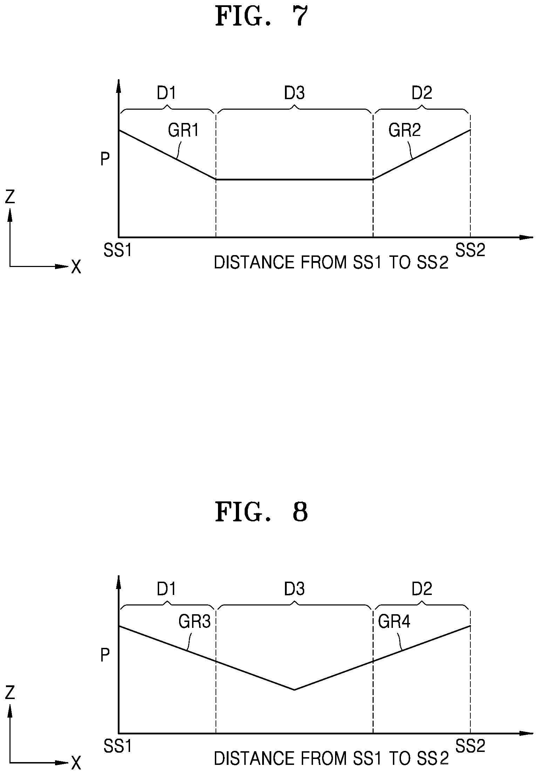

Referring to FIGS. 7 and 8, in the dry electrode film 150, porosity decreases continually in a direction from the first side surface SS1 or the second side surface SS2, to the interface between the first region D1 and the third region D3 and/or the interface between the second region D2 and the third region D3. With the dry electrode film 150 having such a porosity gradient, the dry electrode film 150 may be more easily impregnated in the electrolyte.

Referring to FIG. 7, for example, porosity (e.g., of the dry electrode film) may continually decrease in a width direction from the first side surface SS1 of the first region D1 to the first interface between the first region D1 and the third region D3. In one or more embodiments, porosity (e.g., of the dry electrode film) may continually decrease in a width direction from the second side surface SS2 of the second region D2 to the second interface between the second region D2 and the third region D3.

Referring to FIG. 8, porosity (e.g., of the dry electrode film) may decrease continually, for example, in a width direction from the first side surface SS1 of the first region D1 to the center of the third region D3. In one or more embodiments, porosity (e.g., of the dry electrode film) may continually decrease in a width direction from the second side surface SS2 of the second region D2 to the center of the third region D3.

Referring to FIGS. 5 to 8, the dry electrode film 150 may have a porosity gradient. In one or more embodiments, the dry electrode film 150 may have a porosity gradient in at least one of the first region D1 and the second region D2. With the dry electrode film 150 having such a porosity gradient, a lithium battery including the dry electrode film 150 may have further improved cycling performance.

Referring to FIGS. 5 and 7, for example, the dry electrode film 150 may have a first porosity gradient GR1 that decreases in a width direction from the first side surface SS1 of the first region D1 to the first interface between the first region D1 and the third region D3. For example, the dry electrode film 150 may have the highest porosity near the first side surface SS1 of the first region D1 and the lowest porosity near the first interface between the first region D1 and the third region D3.

In one or more embodiments, the dry electrode film 150 may have a second porosity gradient GR2 that decreases in a width direction from the second side surface SS2 of the second region D2 to the interface between the second region D2 and the third region D3. For example, the dry electrode film 150 may have the highest porosity near the second side surface SS2 of the second region D2 and the lowest porosity near the second interface between the second region D2 and the third region D3.

In one or more embodiments, the dry electrode film 150 may have a first porosity gradient GR1 that decreases in a width direction from the first side surface SS1 of the first region D1 to the interface between the first region D1 and the third region D3, and a second porosity gradient GR2 that decreases in a width direction from the second side surface SS2 of the second region D2 to the interface between the second region D2 and the third region D3. The absolute values of the first porosity gradient GR1 and the second porosity gradient GR2 may be the same, or different from each other. In one or more embodiments, the third region D3 may not have a porosity gradient and instead, have a constant porosity in a width direction.

Porosity gradient may be calculated from, for example, weight, volume, thickness, and/or the like, according to the locations of the respective regions. In some embodiments, porosity may be calculated from cross-sectional scanning electron microscope images according to the locations of the respective regions.

Referring to FIGS. 6 and 8, for example, the dry electrode film 150 may have a porosity gradient in at least one from among the first region D1, the second region D2, and the third region D3. With the dry electrode film 150 having such a porosity gradient, a lithium battery including the dry electrode film 150 may have further improved cycling performance.

In one or more embodiments, the dry electrode film 150 may have a third porosity gradient GR3 that decreases in a width direction from the first side surface SS1 of the first region D1 to the center of the third region D3. In one or more embodiments, the dry electrode film 150 may have the highest porosity near the first side surface SS1 of the first region D1 and the lowest porosity near the center of the third region D3.

In one or more embodiments, the dry electrode film 150 may have a fourth porosity gradient GR4 that decreases in a width direction from the second side surface SS2 of the second region D2 to the center of the third region D3. In one or more embodiments, the dry electrode film 150 may have the highest porosity near the second side surface SS2 of the second region D2 and the lowest porosity near the center of the third region D3.

In one or more embodiments, the dry electrode film 150 may have a third porosity gradient GR3 that decreases in a width direction from the first side surface SS1 of the first region D1 to the center of the third region D3, and a fourth porosity gradient GR4 that decreases in a width direction from the second side surface SS2 of the second region D2 to the center of the third region D3. The absolute values of the third porosity gradient (GR3) and the fourth porosity gradient GR4 may be the same or different from each other.

Referring to FIGS. 1 to 8, in the dry electrode film 150, a third dry electrode active material may have the same composition as a composition of the first dry electrode active material and a composition of the second dry electrode active material. The first region D1, the second region D2, and the third region D3 of the dry electrode film 150 may have the same dry electrode active material, and may have a varied porosity along a width direction of the dry electrode film 150. With the dry electrode film 150 including a dry electrode active material of the same composition, manufacturing of the dry electrode film 150 may be facilitated.

Referring to FIGS. 1 to 8, in the dry electrode film 150, for example, the third dry electrode active material may have a different composition from at least one of the composition of the first dry electrode active material or the composition of the second dry electrode active material. Because the dry electrode film 150 includes the third region D3 that contains a dry electrode active material having a different composition from at least one of the first region D1 or the second region D2, porosity of the dry electrode film 150 may be more easily controlled or selected.

In one or more embodiments, at least one of the first dry electrode active material, the second dry electrode active material, or the third dry electrode active material may include two or more dry electrode active materials. In one or more embodiments, at least one of the first region D1, the second region D2, or the third region D3 may include two or more dry electrode active materials. Because at least one of the first region D1, the second region D2, or the third region D3 may include two or more dry electrode active materials, porosity of the dry electrode film 150 may be more easily controlled or selected.

Referring to FIGS. 1 to 8, the average particle diameter (e.g., D50) of the third dry electrode active material (e.g., in particle form (e.g., in the form of particles)) may be larger than, for example, each of the average particle diameter (e.g., D50) of the first dry electrode active material (e.g., in particle form) and the average particle diameter (e.g., D50) of the second dry electrode active material (e.g., in particle form). Because the average particle diameter of the third dry electrode active material is larger than each of the average particle diameter of the first dry electrode active material and the average particle diameter of the second dry electrode active material, energy density of the dry electrode film 150 may improve. The average particle diameter DA1 (e.g., D50) of the first dry electrode active material may be (substantially) the same as the average particle diameter DA2 (e.g., D50) of the second dry electrode active material. In one or more embodiments, the ratio DA3/DA1 of average particle diameter DA3 (e.g., D50) of the third dry electrode active material to average particle diameter DA1 (e.g., D50) of the first dry electrode active material may be about 1.5 to about 20, about 2 to about 10, about 2 to about 8, or about 2 to about 6. In one or more embodiments, the ratio DA3/DA2 of average particle diameter DA3 (e.g., D50) of the third dry electrode active material to average particle diameter DA2 (e.g., D50) of the second dry electrode active material may be about 1.5 to about 20, about 2 to about 10, about 2 to about 8, or about 2 to about 6. Because the ratio of the average particle diameter of the third dry electrode active material to the average particle diameter of the first dry electrode active material and/or the average particle diameter of the second dry electrode active material is within the described ranges, a lithium battery including the dry electrode film 150 may have further improved cycling performance. The average particle diameter may be measured by, for example, a laser diffraction method. The average particle diameter may be measured from a scanning electron microscope image.

Referring to FIGS. 1 to 8, the amount of the third dry electrode active material in the third region D3 is greater than at least one of the amount of a dry electrode active material in the first region D1 or the amount of the second dry electrode active material in the second region (D2). Because the amount of the third dry electrode active material in the third region D3 is greater than each of the amount of the first dry electrode active material in the first region D1 and the amount of the second dry electrode active material in the second region D2, energy density of the dry electrode film 150 may improve. The amount of first dry electrode active material in the first region D1 may be (substantially) the same as the amount of second dry electrode active material in the second region D2. In one or more embodiments, the ratio AM3/AM1 of the amount of the third dry electrode active material AM3 in the third region D3 to the amount of the first dry electrode active material AM1 in the first region D1 may be about 1.01 to about 1.5, about 1.01 to about 1.2, about 1.01 to about 1.2, or about 1.01 to about 1.1. In one or more embodiments, the ratio AM3/AM2 of the amount of the third dry electrode active material AM3 in the third region D3 to the amount of the first dry electrode active material AM2 in the second region D2 may be about 1.01 to about 1.5, about 1.01 to about 1.2, about 1.01 to about 1.2, or about 1.01 to about 1.1. As the ratio of the amount of the third dry electrode active material in the third region D3 to the amount of the first dry electrode active material in the first region D1 or the amount of the second dry electrode active material in the second region D2 is within the described ranges, a lithium battery including the dry electrode film 150 may have further improved cycling performance.

Referring to FIGS. 1 to 8, the mixture density of the third region D3 may be, for example, higher than the mixture density of the first region D1 and the mixture density of the second region D2. Because the mixture density of the third region D3 is higher than each of the mixture density of the first region D1 and the mixture density of the second region D2, energy density of the dry electrode film 150 may further increase. The mixture density of the first dry electrode active material in the first region D1 may be (substantially) the same as the mixture density of the second dry electrode active material in the second region D2. In one or more embodiments, the ratio MD3/MD1 of mixture density M3 of the third region D3 to mixture density M1 of the first region D1 may be about 1.01 to about 3, 1.01 to about 2, about 1.01 to about 1.5, or about 1.01 to about 1.1. In one or more embodiments, the ratio MD3/MD2 of mixture density M3 of the third region D3 to mixture density M2 of the second region D2 may be about 1.01 to about 3, 1.01 to about 2, about 1.01 to about 1.5, or about 1.01 to about 1.1. Because the ratio of the mixture density of the third region D3 to the mixture density of the first region D1 or the mixture density of the second region D2 is within the described ranges, a lithium battery including the dry electrode film 150 may have further improved cycling performance. Mixture density may be calculated from, for example, weight, volume, thickness, and/or the like, of each region.

Referring to FIG. 2, the dry electrode film 150 may include a third side surface SS3 provided at one end of a length direction perpendicular to a width direction and a fourth side surface SS4 opposite to the third side surface SS3, wherein the third region D3 may include at least part of each of the third side surface SS3 and the fourth side surface SS4. Because the third region D3 includes at least one of the third side surface SS3 and the fourth side surface SS4, the dry electrode film 150 may be manufactured in a simpler manner.

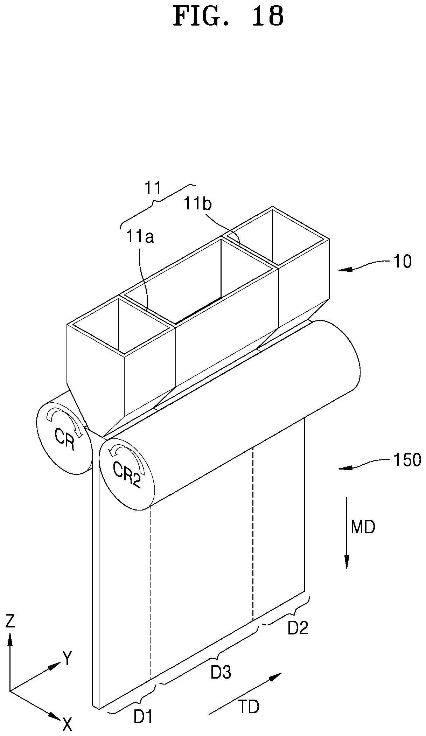

Referring to FIG. 18, for example, the dry electrode film 150 may be prepared by feeding, from a mixture feeder compartmentalized by partitions, a first dry composition including a first dry electrode active material, a second dry composition including a second dry electrode active material, and/or a third dry composition including a third dry electrode active material, between a first calendar roll and a second calendar roll. Thus, the third region D3 formed from the third dry composition may include the third side surface SS3 or the fourth side SS4 that is one longitudinal end of the dry electrode film 150. By including at least one of the third side surface SS3 or the fourth side surface SS4, the shape of the widthwise cross-section of the dry electrode film 150 may remain substantially the same regardless of the cut location. Because the dry electrode film 150 has the described structure, the first width W1 of the first region D1, the second width W2 of the second region D2, and the third width W3 of the third region D3 may be easily altered, for example, by controlling the positions of the partitions in the mixture feeder. Further, by controlling the number and/or positions of partitions included in the mixture feeder, the distribution of porosities included in the dry electrode film 150 may be easily controlled or selected, or the number of regions may be additionally increased.

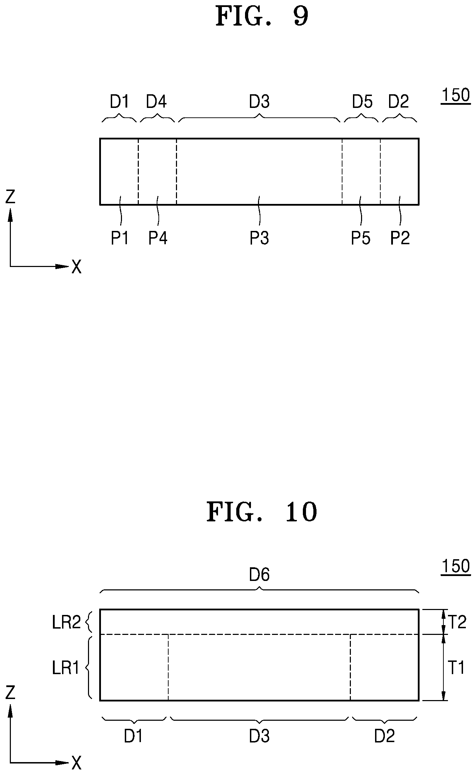

Referring to FIG. 9, the dry electrode film 150 may further include at least one of a fourth region D4 provided between the first region D1 and the third region D3, and/or a fifth region D5 provided between the second region D2 and the third region D3. Because the dry electrode film 150 further includes the fourth region D4 and/or the fifth region D5, the dry electrode film 150 may be controlled or selected so as to have one or more suitable porosities.

In one or more embodiments, the fourth region D4 may have a fourth porosity P4 that is smaller than the first porosity P1 of the first region D1 and larger than the third porosity P3 of the third region D3. In one or more embodiments, the fifth region D5 may have a fifth porosity P5 that is smaller than the second porosity P2 of the second region D2 and larger than the third porosity P3 of the third region D3. In some embodiments, the fourth porosity P4 may be (substantially) the same as the fifth porosity P5. For example, a fourth porosity P4 of the fourth region D4 may be 95 % or less, or 90 % or less of a first porosity P1 of the first region D1. For example, a fourth porosity P4 of the fourth region D4 may be 50 % to 95 %, 60 % to 90 %, 70 % to 90 % or 80 % to 90 % of a first porosity P1 of the first region D1. For example, a fifth porosity P5 of the fifth region D5 may be 95 % or less, or 90 % or less of a second porosity P2 of the second region D2. For example, a fifth porosity P5 of the fifth region D5 may be 50 % to 95 %, 60 % to 90 %, 70 % to 90 % or 80 % to 90 % of a second porosity P2 of the second region D2. For example, a third porosity P3 of the third region D3 may be 95 % or less, or 90 % or less of a fourth porosity P4 of the fourth region D4. For example, a third porosity P3 of the third region D3 may be 50 % to 95 %, 60 % to 90 %, 70 % to 90 % or 80 % to 90 % of a fourth porosity P4 of the fourth region D4. For example, a third porosity P3 of the third region D3 may be 95 % or less, or 90 % or less of a fifth porosity P5 of the fifth region D5. For example, a third porosity P3 of the third region D3 may be 50 % to 95 %, 60 % to 90 %, 70 % to 90 % or 80 % to 90 % of a fifth porosity P5 of the fifth region D5.

In one or more embodiments, in the dry electrode film 150, porosity may gradually decrease in a direction from the first region D1, through the fourth region D4, to the third region D3, and porosity may gradually decrease in a direction from the second region D2, through the fifth region D5, to the third region D3. With the dry electrode film 150 having such a porosity distribution, the dry electrode film 150 may be more easily impregnated in the electrolyte.

Referring to FIG. 10, the dry electrode film 150 may have a multilayer structure, for example. The dry electrode film 150 may further include a first layer LR1 and a second layer LR2 provided on the first layer LR1.

The first layer LR1 may include the first region D1, the second region D2, and the third region D3. The second layer LR2 provided on the first layer LR1 may include a sixth region D6.

The sixth porosity P6 of the sixth region D6 may be higher than the third porosity P3 of the third region D3. Because the sixth region D6 has a higher porosity than the porosity of the third region D3, impregnation in the electrolyte may be further facilitated in the thickness direction of the dry electrode film 150. For example, a third porosity P3 of the third region D3 may be 95 % or less, 90 % or less, 85 % or less or 80 % or less of a sixth porosity of the sixth region D6. For example, a third porosity P3 of the third region D3 may be 10 % to 95 %, 30 % to 90 %, 50 % to 85 % or 70 % to 80 % of a sixth porosity P6 of the sixth region D6.

In one or more embodiments, the ratio T1/T2 of thickness T1 of the first layer to thickness T2 of the second layer may be about 2/1 to about 9/1, about 2/1 to about 8/2, about 2/1 to about 7/3, or about 2/1 to about 6/4. With the first layer and the second layer having a thickness ratio in the described ranges, the dry electrode film 150 may be more easily impregnated in the electrolyte.

In one or more embodiments, the dry electrode film 150 may be a self-standing film. For example, the dry electrode film 150 may retain a film form without a support. The dry electrode film 150 that has the form of a self-supporting film may be easy to handle and therefore, may be readily applied to one or more suitable types (kinds) of lithium battery manufacturing processes. The dry electrode film 150 may be first prepared as a separate self-standing film and then provided on an electrode current collector, which makes it possible to omit an additional drying process and/or the like, and thus simplifies the lithium battery manufacturing process.

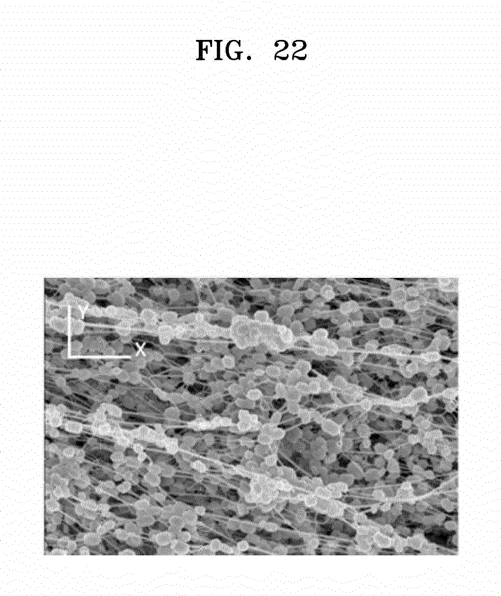

The dry electrode film 150 may include a dry binder. The dry binder is, for example, a binder that does not get impregnated, dissolved, or dispersed in processing solvents during the manufacturing process of the dry electrode film 150. The dry binder is, for example, a binder that does not contain processing solvents or does not come in contact with processing solvents during the manufacturing process of the dry electrode film 150. In one or more embodiments, the dry binder may be a fibrillized binder or a fibrous binder. The fibrillized binder or the fibrous binder may act as a matrix that supports and binds together electrode active materials and other components included in the dry electrode film 150. The fibrous form of the fibrillized binder or the fibrous binder may be confirmed from, for example, a cross-sectional scanning electron microscopic image of an electrode, as shown in FIG. 22. In one or more embodiments, the fibrillized binder or the fibrous binder may have an aspect ratio of 10 or more, 20 or more, 50 or more, or 100 or more. In one or more embodiments, the fibrillized binder may include a binder that is fibrillized in a length direction (machine direction, MD) of a dry electrode film. Thus, in the dry electrode film, the tensile strength in the MD may be greater than the tensile strength in a width direction of the dry electrode film.

For example, the dry binder may include at least one selected from polytetrafluoroethylene (PTFE), a polyvinylidene fluoride-hexafluoropropylene (PVDF-HFP) copolymer, polyvinylidene fluoride (PVDF), polyvinyl alcohol (PVA), polyacrylonitrile (PAN), carboxymethylcellulose (CMC), starch, hydroxy propyl cellulose, cellulose, polyvinylpyrrolidone (PVP), polyethylene (PE), polypropylene (PP), ethylene-propylene-diene monomer (EPDM) rubber, sulfonated-EPDM rubber, styrene butadiene rubber (SBR), fluorine-containing rubber, and/or one or more combinations thereof. However, the dry binder is not limited to the aforementioned examples and may utilize any binder available for the preparation of a dry electrode. For example, the dry binder may include a fluorinated binder. For example, the fluorinated binder may be polytetrafluoroethylene (PTFE), a polyvinylidene fluoride-hexapropylene (PVDF-HFP) copolymer, polyvinylidene fluoride (PVDF), or a combination thereof.

The dry binder may have a glass transition temperature T_{g} of, for example, about -30 °C to about 150 °C, about 15 °C to about 150 °C, about 15 °C to about 130 °C, about 50 °C to about 130 °C, about 100 °C to about 130 °C, or about 120 °C to about 130 °C. A glass transition temperature T_{g} of a first dry binder may be about -30 °C to about 150 °C, about 15 °C to about 150 °C, about 15 °C to about 130 °C, about 50 °C to about 130 °C, about 100 °C to about 130 °C, or about 120 °C to about 130 °C. A glass transition temperature T_{g} of a second dry binder may be about -30 °C to about 150 °C, about 15 °C to about 150 °C, about 15 °C to about 130 °C, about 50 °C to about 130 °C, about 100 °C to about 130 °C, or about 120 °C to about 130 °C. The glass transition temperature of PTFE is, for example, about 120 °C to about 130 °C. With the dry binders having a glass transition temperature in the described ranges, a fibrillized binder or a fibrous binder may be more easily obtained during the dry electrode manufacturing process. The glass transition temperature of the dry binder may be for example measured by DSC (Differential Scanning Calorimeter), DMA (Dynamic Mechanical Analyzer), TMA (Thermomechanical Analyzer), and/or TGA (Thermogravimetric Analyzer).

The content (e.g., amount) of the dry binder may be, for example, about 0.1 wt% to about 5 wt%, about 0.5 wt% to about 4 wt%, or about 1 wt% to about 3 wt%, with respect to the total weight of the dry electrode film 150. Because the dry electrode film 150 includes a dry binder in the described ranges, the dry electrode film 150 may have improved adhesive strength and maintain high energy density. In one or more embodiments, the content (e.g., amount) of the dry binder may be about 0.1 wt% to about 5 wt%, about 0.5 wt% to about 4 wt%, or about 1 wt% to about 3 wt%, with respect to the total weight of the dry electrode film 150.

In one or more embodiments, the dry electrode film 150 may further include a conductive material. In one or more embodiments, the conductive material may be a dry conductive material. For example, the dry conductive material may be a conductive material that does not get impregnated, dissolved, or dispersed in processing solvents during the manufacturing process of the dry electrode film 150. For example, the dry conductive material may be a conductive material that does not contain processing solvents or does not come in contact with processing solvents during the manufacturing process of the dry electrode film 150. In one or more embodiments, the dry conductive material may include a carbon-based conductive material. In one or more embodiments, the carbon-based conductive material may include a fibrous carbon-based material having an aspect ratio of 10 or more, a particulate carbon-based material having an aspect ratio of less than 5, or any combination thereof.

In one or more embodiments, the fibrous carbon-based material having an aspect ratio of 10 or more may be carbon fibers, carbon nanotubes, carbon nanobelts, and/or the like, but without being limited thereto, may utilize any material available as a carbon-based conductive material in the art.

The particulate carbon-based material having an aspect ratio of less than 5 may be, for example, Denka black, carbon black, acetylene black, Ketjen black, natural graphite, artificial graphite, and/or the like, but without being limited thereto, may utilize any material available as a carbon-based conductive material in the art. In one or more embodiments, the aspect ratio of the particulate carbon-based material may be about 1 to about 5, about 1 to about 4, about 1 to about 3, or about 1 to about 2.

The content (e.g., amount) of the dry conductive material included in the dry electrode film 150 may be, for example, about 0.1 wt% to about 5 wt%, about 0.5 wt% to about 4 wt%, or about 1 wt% to about 3 wt%, with respect to the total weight of the dry electrode film 150. Because the dry electrode film 150 includes a dry conductive material in the described ranges, conductivity of the dry electrode film 150 may improve, and a lithium battery including the dry electrode film 150 may have improved cycling performance.

The dry electrode film 150 may be free of residual processing solvent. Because the dry electrode film 150 includes a dry electrode active material, a dry binder, and a dry conductive material, no processing solvent is utilized in the preparation process of the dry electrode film 150, and thus, the dry electrode film 150 may be free of any residual processing solvent deliberately utilized. In one or more embodiments, the dry electrode film 150 may be prepared by a dry method and thus may not include (e.g., may exclude) any processing solvent deliberately added or is a solvent-free method. In the present disclosure, "not including a or any 'component,'" "excluding a or any 'component,'" "'component'-free," and/or the like refers to that the "component" is not being added, selected or utilized as a component in the composition, but that the "component" in a less than suitable amount may still be included due to other impurities and/or external factors.

For example, the dry electrode film 150 may contain no residual processing solvent. Incidental traces (e.g., trace amounts) of solvents may remain in the dry electrode film 150, but such trace solvents are not considered as deliberately added processing solvents. As such, the dry electrode film 150 may be distinguished from a wet electrode active material layer prepared by mixing components and a processing solvent together, and then completely or partially removing the processing solvent through drying.

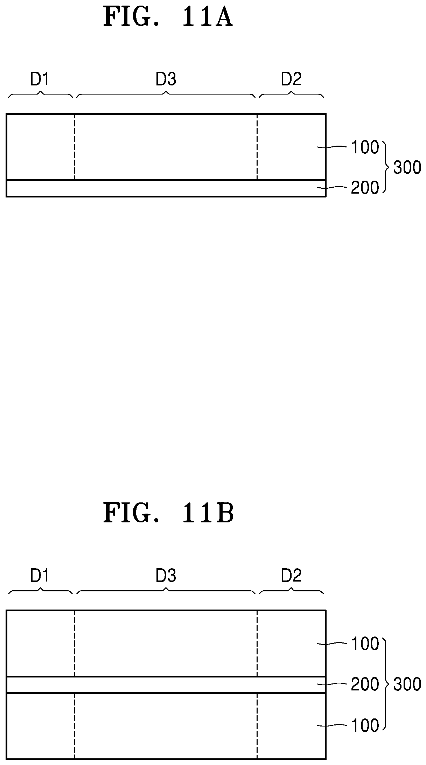

Referring to FIGS. 11A to 14, a dry electrode 300 according to another embodiment may include a dry electrode active material layer 100 and an electrode current collector 200 which is provided on one side of the dry electrode active material 100 or provided between the one side and the other side opposite to the one side, wherein the electrode active material layer 100 may include the dry electrode film described. As the dry electrode 300 includes the dry electrode film 150 having improved mechanical strength and/or structural stability, degradation due to volume changes of the dry electrode 300 during charging and discharging may be suppressed or reduced. A lithium battery including the dry electrode 300 may have improved cycling performance.

Referring to FIGS. 11A to 11B, the dry electrode 300 may include an electrode current collector 200 and a dry electrode active material layer 100 provided on one side or both (e.g., opposite) sides of the electrode current collector 200.

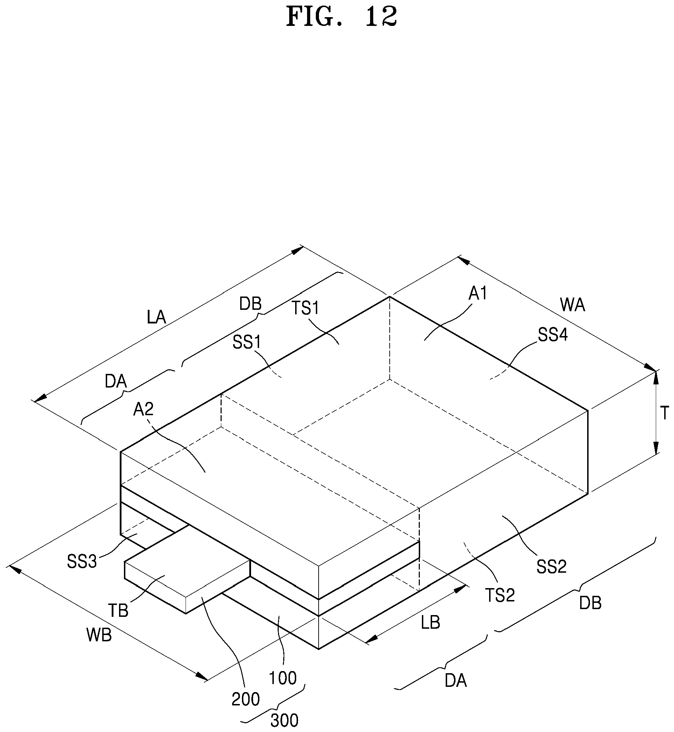

Referring to FIGS. 12 to 14, in the dry electrode 300, for example, the electrode current collector 200 may be provided only on a part of one side of the electrode active material layer, or on a part between both (e.g., opposite) sides of the electrode active material layer. Because the electrode current collector 200 may be provided only on a part of one side of the electrode active material layer or on a part between both (e.g., opposite) sides of the electrode active material layers, the volume taken up by the electrode current collector 200 inside the electrode decreases. Therefore, a lithium battery including an electrode with the electrode current collector 200 having a reduced volume may have improved energy density. Therefore, a lithium battery providing improved output may be provided.

In one or more embodiments, the dry electrode 300 may include a domain DA which includes an electrode active material layer and the electrode current collector 200 provided on one side of the electrode active material layer or between both (e.g., opposite) sides of the electrode active material layer; and a domain DB which includes the electrode active material layer and is free of the electrode current collector 200 on one side of the electrode active material layer or between both (e.g., opposite) sides of the electrode active material layer.

In one or more embodiments, the electrode having the electrode current collector 200 only provided on a part of one side of the electrode active material layer, or on a part of between both (e.g., opposite) sides of the electrode active material layer may be a stretchable electrode. The stretchable electrode may be stretchable in at least one direction selected from a length direction and a width direction of the stretchable direction. In one or more embodiments, the stretchable electrode may be stretchable by 5 % or more, 10 % or more, 15 % or more, 20 % or more, 30 % or more, 40 % or more, or 50 % or more in a length direction of the electrode. In one or more embodiments, the stretchable electrode may be stretchable, in a length direction of the electrode, by about 5 % to about 100 %, about 10 % to about 100 %, about 15 % to about 100 %, about 20 % to about 100 %, about 30 % to about 100 %, about 40 % to about 100 %, or about 50 % to about 100 %. In one or more embodiments, the stretchable electrode may be stretchable by 5 % or more, 10 % or more, 15 % or more, 20 % or more, 30 % or more, 40 % or more, or 50 % or more in a width direction of the electrode. In one or more embodiments, the stretchable electrode may be stretchable in a width direction of the electrode, about 5 % to about 100 %, about 10 % to about 100 %, about 15 % to about 100 %, about 20 % to about 100 %, about 30 % to about 100 %, about 40 % to about 100 %, or about 50 % to about 100 %. In one or more embodiments, even after being stretched, the stretchable electrode may be able to restore to its original length without cracks in the electrode, and even after such a cycle is repeated multiple times, the electrode may not exhibit crack formation and/or the like. In one or more embodiments, the stretchable electrode may include the electrode current collector 200 only in the domain DA and not include the electrode current collector 200 in the second region D2, such that the second region D2 can be easily stretched. Further, because the electrode current collector 200 is provided only in a part of the electrode, even if (e.g., when) a stack of a plurality of electrodes is bent or wound, delamination between the electrode active material layer and the electrode current collector 200 may be minimized or reduced, and lithium batteries of one or more suitable shapes may be easily realized.

Referring to FIG. 12, the dry electrode 300 may include the electrode active material layer 100, and the dry electrode 300 may include an electrode active material layer 100 including an electrode active material and a binder; and an electrode current collector 200 provided on a part of between both (e.g., opposite) sides of the electrode active material layer 100. The domain DA may be a domain including the electrode active material layer 100 and the electrode current collector 200 provided between both (e.g., opposite) sides of the electrode active material layer 100. The domain DA may be a domain including the electrode current collector 200 and the electrode active material layer 100 provided on both (e.g., opposite) sides of the electrode current collector 200 in an electrode thickness direction. The domain DB may be a domain including the electrode active material layer 100 and not including the electrode current collector 200 provided between both (e.g., opposite) sides of the electrode active material layer 100. In some embodiments, the domain DB may be the region of the electrode active material layer remaining after excluding the domain DA. The domain DA and the domain DB, included in the dry electrode 300, may have substantially the same thickness.

Referring to FIG. 12, the dry electrode 300 may include an electrode active material layer 100, wherein the electrode active material layer 100 may include a first top surface TS1 and a second top surface TS2 opposite to the first top surface, may include a third side surface SS3 connected to lengthwise ends of the first top surface TS1 and the second top surface TS2, and a fourth side surface SS4 opposite to the third side surface SS3, and may include a first side surface SS1 connected to widthwise ends of the first top surface TS1 and the second top surface TS2, and a second side surface SS2 opposite to the first side surface SS1. The domain DA may be a domain that is defined by the first top surface TS1, the second top surface TS2, the first side surface SS1, and the second side surface SS2, and includes the electrode current collector 200 provided between the first top surface TS1 and the second top surface TS2. The domain DB may be a domain that is defined by the first top surface TS1, the second top surface TS2, the first side surface SS1, and the second side surface SS2, and is free of the electrode current collector 200 between the first top surface TS1 and the second top surface TS2. The domain DA and the domain DB included in the dry electrode 300 may have substantially the same thickness T.

Referring to FIG. 12, the electrode active material layer 100 has a first area A1 defined by a first lengthwise distance LA and a first widthwise distance WA, the electrode current collector 200 is provided between the first top surface TS1 and the second top surface TS2, and the electrode current collector 200 has a second area A2 and defined by a second lengthwise distance LB and a second widthwise distance WB, wherein the second area A2 of the electrode current collector 200 is 90 % or less of the first area A1 of the electrode active material layer 100. In one or more embodiments, the second area A2 of the electrode current collector 200 may be about 1 % to about 90 %, about 5 % to about 80 %, about 10 % to about 70 %, about 10 % to about 60 %, about 10 % to about 50 %, about 10 % to about 40 %, about 10 % to about 30 %, or about 10 % to about 20 % with respect to the first area A1 of the electrode active material layer 100. Because the area of the electrode current collector 200 is smaller than the electrode active material layer 100 in the dry electrode 300, a lithium battery employing the dry electrode 300 may have further improved energy density.

Referring to FIG. 12, the second lengthwise distance LB of the electrode current collector 200 may be, for example, 90 % or less, 80 % or less, 70 % or less, 60 % or less, 50 % or less, 40 % or less, 30 % or less, or 20 % or less, with respect to the first lengthwise distance LA of the electrode active material layer 100. In one or more embodiments, a second lengthwise distance LB of the electrode current collector 200 may be about 1 % to about 90 %, about 5 % to about 80 %, about 10 % to about 70 %, 10 % to about 60 %, about 10 % to about 50 %, about 10 % to about 40 %, about 10 % to about 30 %, or about 10 % to about 20 %, with respect to a first lengthwise distance LA of the electrode active material layer 100. In one or more embodiments, a second widthwise distance WB of the electrode current collector 200 may be 100 % or less, 90 % or less, 80 % or less, 70 % or less, 60 % or less, 50 % or less, 40 % or less, 30 % or less, or 20 % or less with respect to a first widthwise distance WA of the electrode active material layer 100. In one or more embodiments, the second widthwise distance WB of the electrode current collector 200 may be 1 % to about 100 %, 5 % to about 90 %, 10 % to about 80 %, 10 % to about 70 %, 10 % to about 60 %, 10 % to about 50 %, 10 % to about 40 %, 10 % to about 30 %, or about 10 % to about 20 %, with respect to the first widthwise distance WA of the electrode active material layer 100. In one or more embodiments, the second lengthwise distance LB of the electrode current collector 200 may be 90 % or less or 50% or less of the first lengthwise distance LA of the electrode active material layer 100, and the second widthwise distance WB of the electrode current collector 200 may be 90 % or less or 50 % or less with respect to the first widthwise distance WA of the electrode active material layer 100. With the electrode current collector 200 having such a size, a lithium battery employing the dry electrode 300 may have further improved energy density.

Referring to FIG. 12, the electrode current collector 200 may be exposed on three or fewer side surfaces of the electrode active material layer 100, selected from among the first side surface SS1, the second side surface SS2, the third side surface SS3, and the fourth side surface SS4. Because the electrode current collector 200 has a surface area smaller than that of the electrode active material layer 100, the electrode current collector 200 may be exposed on some of the side surfaces of the electrode active material layer 100, for example, three side surfaces, two side surfaces, or one side surface. If (e.g., when) the number of side surfaces of the electrode active material layer 100 on which the electrode current collector 200 is exposed decreases, the likelihood of a short circuit occurring through the side surfaces of the electrode active material layer 100 decreases, and therefore, the safety of a lithium battery employing the dry electrode 300 may improve.

Referring to FIG. 12, the electrode current collector 200 further includes a tab TB, which extends out of the electrode active material layer 100 through two or fewer side surfaces selected from the first side surface SS1, the second side surface SS2, the third side surface SS3, and the fourth side surface SS4. In one or more embodiments, the tab TB may extend out of the electrode active material layer 100 through the third side surface SS3 and/or the fourth side surface SS4. In one or more embodiments, the tab TB may extend out of the electrode active material layer 100 through the first side surface SS1 and/or the second side surface SS2. Because the tab TB extends out of the electrode active material layer 100 through one side surface, or through two side surfaces opposite to each other, a short circuit due to multiple tabs TB adjacent to one another may be inhibited.

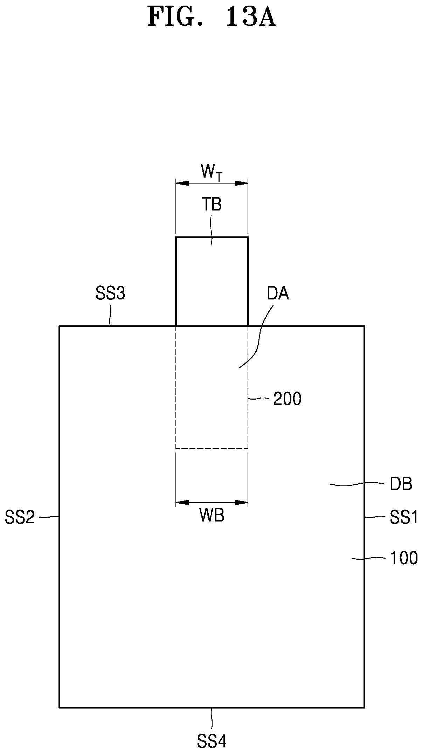

Referring to FIGS. 13A to 13F, in the dry electrode 300, the electrode current collector 200 provided in a part of between both (e.g., opposite) sides of the electrode active material layer 100 may have one or more suitable shapes and may be provided at one or more suitable positions within the electrode active material layer 100. In FIGS. 13A to 13F, in the electrode active material layer 100 defined by the first side surface SS1, the second side surface SS2, the third side surface SS3, and the fourth side surface SS4, the region in which the electrode current collector 200 is situated corresponds to domain DA, and the region in which the electrode current collector 200 is not provided corresponds to domain DB. The domain DA may be a region that includes the electrode active material layer 100 and the electrode current collector 200 provided on one side or between both (e.g., opposite) sides of the electrode active material layer 100. The domain DA may be a region that includes the electrode current collector 200 and the electrode active material layer 100 provided on one side or both (e.g., opposite) sides of the electrode current collector 200 in an electrode thickness direction. The domain DB may be a region that includes the electrode active material layer 100 and is free of the electrode current collector 200 provided on one side or between both (e.g., opposite) sides of the electrode active material layer 100. The domain DB may be the remaining region of the electrode active material layer, excluding the domain DA.

Referring to FIG. 13A, the electrode current collector 200 may be provided in a part of the electrode active material layer 100 defined by the first side surface SS1, the second side surface SS2, the third side surface SS3, and the fourth side surface SS4. The electrode current collector 200 may be exposed on the third side surface SS3 of the electrode active material layer 100, and include a tab TB extending out of the electrode active material layer 100 through the third side surface SS3. A widthwise width W_{T} of the tab may be 100 % of the second widthwise distance WB of the electrode current collector 200.

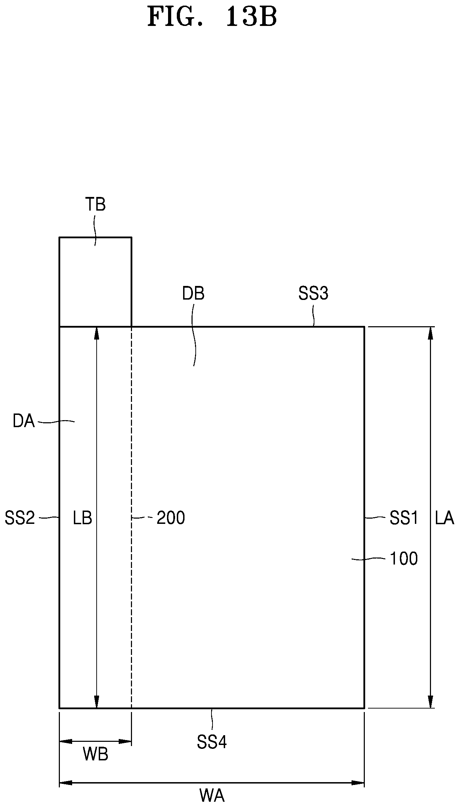

Referring to FIG. 13B, the electrode current collector 200 may be provided in a part of the electrode active material layer 100 defined by the first side surface SS1, the second side surface SS2, the third side surface SS3, and the fourth side surface SS4. The electrode current collector 200 may be exposed on the second side surface SS2, the third side surface SS3, and the fourth side surface SS4 of the electrode active material layer 100, and include a tab TB extending out of the electrode active material layer 100 through the third side surface SS3. A second lengthwise distance LB of the electrode current collector 200 may be 100 % of a first lengthwise distance LA of the electrode active material layer 100. A second widthwise distance WB of the electrode current collector 200 may be less than 100 % of a first widthwise distance WA of the electrode active material layer 100.

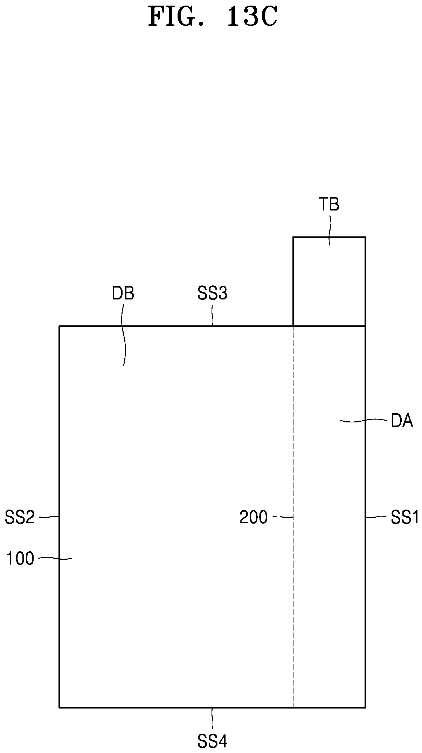

Referring to FIG. 13C, the electrode current collector 200 may be provided in a part of the electrode active material layer 100 defined by the first side surface SS1, the second side surface SS2, the third side surface SS3, and the fourth side surface SS4. The electrode current collector 200 may be exposed on the first side surface SS1, the third side surface SS3, and the fourth side surface SS4 of the electrode active material layer 100 and include a tab TB extending out of the electrode active material layer 100 through the third side surface SS3.

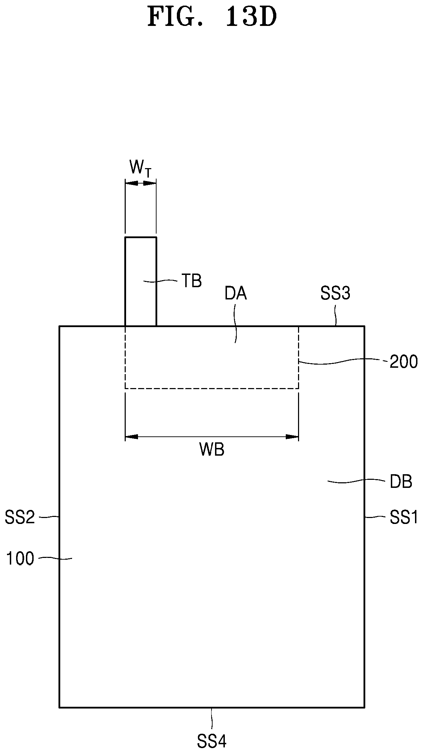

Referring to FIG. 13D, the electrode current collector 200 may be provided in a part of the electrode active material layer 100 defined by the first side surface SS1, the second side surface SS2, the third side surface SS3, and the fourth side surface SS4. A widthwise width W_{T} of the tab may be less than 100 % of the second widthwise distance WB of the electrode current collector 200.

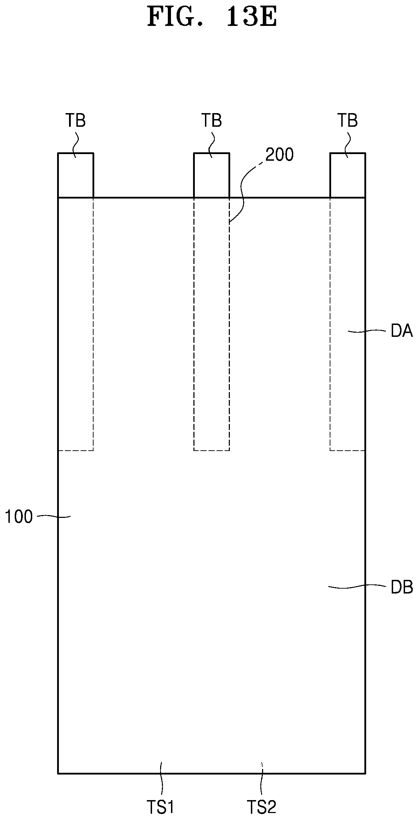

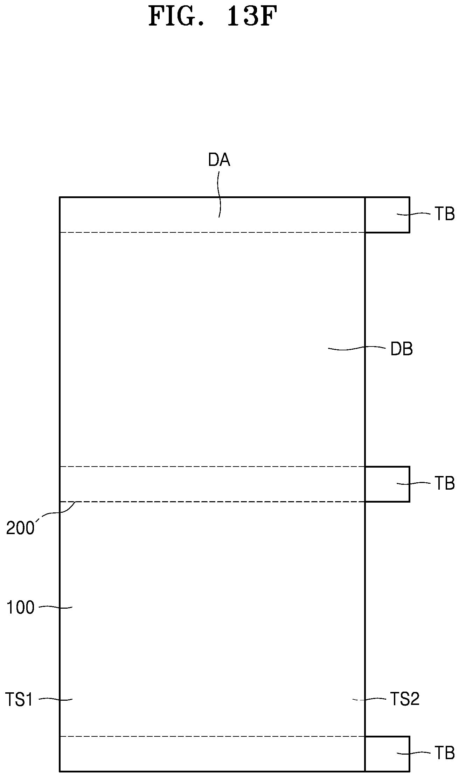

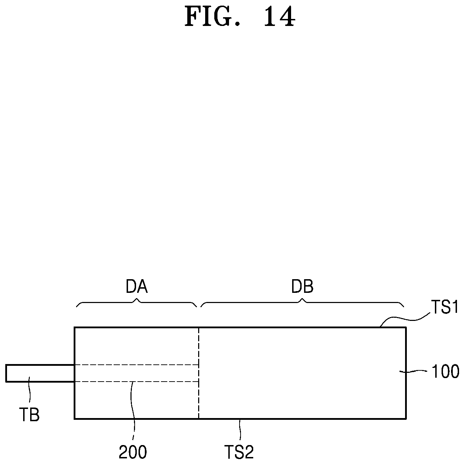

Referring to FIGS. 13E and 13F, and FIG. 14, a plurality of the electrode current collector 200 may be provided in a part of the electrode active material layer 100 defined by the first side surface SS1, the second side surface SS2, the third side surface SS3, and the fourth side surface SS4. The plurality of electrode current collectors 200 may be provided and spaced and/or apart from each other in a length direction or a width direction of the active material layer 100. In one or more embodiments, the plurality of electrode current collectors 200 may be spaced and/or apart from each other at the same interval or at different intervals. The plurality of electrode current collectors 200 may form an angle of 45° or less, 40° or less, 30° or less, 25° or less, 20° or less, 15° or less, 10° or less, or 5° or less, with at least one of the first top surface TS1 and the second top surface TS2. In one or more embodiments, the plurality of electrode current collectors 200 may be provided parallel to one surface of the electrode active material layer 100, forming an angle of 0°. In one or more embodiments, the plurality of electrode current collectors 200 may be provided between the first top surface TS1 and the second top surface TS2 of the electrode active material layer 100.

Referring to FIG. 14, the electrode active material layer 100 may include a domain DA in which the electrode current collector 200 is provided between the first top surface TS1 and the second top surface TS2; and a domain DB free of the electrode current collector 200 between the first top surface TS1 and the second top surface TS2. In one or more embodiments, the mixture density of the electrode active material layer 100 included in the domain DB may be less than 99 %, 98 % or less, 97 % or less, 96 % or less, 95 % or less, or 90 % or less, with respect to the mixture density of the electrode active material layer 100 included in the domain DA. In one or more embodiments, the mixture density of the electrode active material layer 100 included in the domain DB may be about 50 % to less than 99 %, about 60 % to about 98 %, about 70 % to about 97 %, about 80 % to about 96 %, or about 90 % to about 95 %, with respect to the mixture density of the electrode active material layer 100 included in the domain DA. Because the domain DA includes the electrode current collector 200 if (e.g., when) rolling the electrode active material layer 100, the mixture density of the electrode active material layer 100 included in the domain DA may be higher than the mixture density of the electrode active material layer 100 included in the domain DB.

If (e.g. when) the dry electrode 300 is measured by a surface and interfacial measuring analysis system (SAICAS), a change of vertical relative binding force (F_{VR}) according to depth from a first point, which is 5 % away from a surface of the electrode active material layer in a direction from the surface of the electrode active material layer to the electrode current collector 200, to a second point, which is 5 % away from a surface of the electrode current collector 200, may be 200 % or less, wherein the first and second point positions are given with respect to the total thickness of the electrode active material layer. In one or more embodiments, the change of vertical relative binding force may be about 10 % to about 200 %, about 10 % to about 150 %, or about 10 % to about 100 %. In one or more embodiments, the second point which is 5 % away from the surface of the electrode current collector 200 in a direction from the surface of the electrode current collector 200 to the electrode active material layer may correspond to a point that is 95 % away from the surface of the electrode active material layer in a direction from the surface of the electrode active material layer to the electrode current collector 200, with respect to the total thickness of the electrode active material layer. The vertical relative binding force may be calculated by Equation 1. For the SAICAS measurement method, refer to Evaluation Example 2, for example. Change in Vertical Binding Force (FV) = [(Maximum Vertical Relative Binding Force (FVR2) - Minimum Vertical Relative Binding Force (FVR1))/Minimum Vertical Relative Binding Force (FVR1)] × 100

Because the change in vertical relative binding force in the dry electrode 300 is 200 % or less as measured by the SAICAS, distributions of constituent components within the dry electrode 300 may be more substantially uniform. Further, because side reactions and increase of internal resistance due to non-substantially uniform distributions of constituent components in the electrode active material layers are suppressed or reduced, reversibility of electrode reactions may improve. Even if (e.g., when) the dry electrode 300 has high loading capacity, cycling performance of the lithium battery including the dry electrode 300 may improve. Because the dry electrode 300 includes an interlayer, adhesion between the electrode active material layer and the electrode current collector 200 may further improve, and internal resistance of the electrode may decrease. Therefore, a lithium battery employing the dry electrode 300 may have improved cycling performance.

If (e.g., when) the dry electrode 300 is measured by the SAICAS, a horizontal binding force ratio from a first point, which is 10 % away from a surface of the electrode active material layer in a direction from the surface of the electrode active material layer to the electrode current collector 200, to a second point, which is 10 % away from a surface of the electrode current collector 200 in a direction from the surface of the electrode current collector 200 to the electrode active material layer (e.g., depth direction), may be 50 % or more, where the first point and the second point positions are given with respect to the total depth from the surface of the electrode active material layer to the surface of the electrode current collector 200. In one or more embodiments, the horizontal binding force ratio may be about 50 % to 100%, about 60 % to 100%, about 70 % to 100%, about 80 % to 100%, or about 90 % to 100%. For example, the second point which is 10 % away from the surface of the electrode current collector 200 in a direction from the surface of the electrode current collector 200 to the electrode active material layer may correspond to a point that is 90 % away from the surface of the electrode active material layer in a direction from the surface of the electrode active material layer to the electrode current collector 200, with respect to the total thickness of the electrode active material layer. For example, horizontal relative binding force ratio may be represented by Equation 2. For the SAICAS measurement method, refer to Evaluation Example 3, for example. Horizontal Binding Force Ratio = [Second Horizontal Binding Force (FH2)/First Horizontal Binding Force (FH1)] × 100

As the horizontal relative binding force ratio is 50 % or more as measured by the SAICAS, the distribution of constituent components inside the electrode may be more substantially uniform. With the electrode having a horizontal relative binding force in the described ranges, a lithium battery employing such an electrode may have further improved cycling performance.

In one or more embodiments, the dry electrode 300 may be a cathode. The cathode may include a cathode active material layer, and the cathode active material layer may include a cathode active material.

The cathode active material included in the cathode active material layer may be a lithium metal oxide, for example, and may utilize any lithium metal oxide commonly available in the art.

For example, the cathode active material may utilize at least one of composite oxides of lithium with a metal selected from cobalt, manganese, nickel, and/or a combination thereof. For example, a compound represented by any one of the following formulae may be utilized: LiₐA_{1-b}B'_{b}D₂ (wherein 0.90≤a≤1 and 0≤b≤0.5); LiₐE_{1-b}B'_{b}O_{2-c}D_{c} (wherein 0.90≤a≤1, 0≤b≤0.5, and 0≤c≤0.05); LiE_{2-b}B'_{b}O_{4-c}D_{c} (wherein 0≤b≤0.5 and 0≤c≤0.05); LiₐNi_{1-b-c}Co_{b}B'_{c}D_{α} (wherein 0.90≤a≤1, 0≤b≤0.5, 0≤c≤0.05, and 0<α≤2); LiₐNi_{1-b-c}Co_{b}B'_{c}O_{2-α}F'_{α} (wherein 0.90≤a≤1, 0≤b≤0.5, 0≤c≤0.05, and 0<α<2); LiₐNi_{1-b-c}Co_{b}B'_{c}O_{2-α}F'₂ (wherein 0.90≤a≤1, 0≤b≤0.5, 0≤c≤0.05, and 0<α<2); LiₐNi_{1-b-c}Mn_{b}B'_{c}D_{α} (wherein 0.90≤a≤1, 0≤b≤0.5, 0≤c≤0.05, and 0<α≤2); LiₐNi_{1-b-c}Mn_{b}B'_{c}O_{2-α}F'_{α} (wherein 0.90≤a≤1, 0≤b≤0.5, 0≤c≤0.05, and 0<α<2); LiₐNi_{1-b-c}Mn_{b}B'_{c}O_{2-α}F'₂ (wherein 0.90≤a≤1, 0≤b≤0.5, 0≤c≤0.05, and 0<α<2); LiₐNi_{b}E_{c}G_{d}O₂ (wherein 0.90≤a≤1, 0≤b≤0.9, 0≤c≤0.5, and 0.001≤d≤0.1); LiₐNi_{b}Co_{c}Mn_{d}GₑO₂ (wherein 0.90≤a≤1, 0≤b≤0.9, 0≤c≤0.5, 0≤d≤0.5, and 0.001≤e≤0.1); LiₐNiG_{b}O₂ (wherein 0.90≤a≤1 and 0.001≤b≤0.1); LiₐCoG_{b}O₂ (wherein 0.90≤a≤1 and 0.001≤b≤0.1); LiₐMnG_{b}O₂ (wherein 0.90≤a≤1 and 0.001≤b≤0.1);LiₐMn₂G_{b}O₄ (wherein 0.90≤a≤1 and 0.001≤b≤0.1);QO₂; QS₂; LiQS₂; V₂O₅; LiV₂O₅; Lil'O₂; LiNiVO₄; Li_{(3-f)}J₂(PO₄)₃ (0≤f≤2); Li_{(3-f)}Fe₂(PO₄)₃ (0≤f≤2); and/or LiFePO₄.

In the formulae representing the described compounds, A may be nickel (Ni), cobalt (Co), manganese (Mn), or a combination thereof; B' may be aluminium (Al), Ni, Co, Mn, chromium (Cr), iron (Fe), magnesium (Mg), strontium (Sr), vanadium (V), a rare earth element, or a combination thereof; D may be oxygen (O), fluorine (F), sulfur (S), phosphorus (P), or a combination thereof; E may be Co, Mn, or a combination thereof; F' may be F, S, P, or a combination thereof; G may be Al, Cr, Mn, Fe, Mg, lanthanum (La), cerium (Ce), Sr, V, or a combination thereof; Q may be titanium (Ti), molybdenum (Mo), Mn, or a combination thereof; I' may be Cr, V, Fe, Sc, yttrium (Y), or a combination thereof; and J may be V, Cr, Mn, Co, Ni, copper (Cu), or a combination thereof.

A compound having a coating layer added on a surface of the described compound may also be utilized. Furthermore, a mixture of the described compound with a compound having a coating layer added thereon may also be utilized. The coating layer added on the surface of the described compound may include, for example, compounds of a coating element, such as oxides and hydroxides of the coating element, oxyhydroxides of the coating element, oxycarbonates of the coating element, and hydroxycarbonates of the coating element. A compound forming the described coating layer may be amorphous or crystalline. The coating element included in the coating layer may be Mg, Al, Co, K, Na, Ca, Si, Ti, V, Sn, Ge, Ga, B, As, Zr, or a mixture thereof. The method of forming the coating layer may be selected within a range that does not adversely affect physical properties of a cathode active material. Examples of coating method may include spray coating, dip coating, and/or the like. Specific coating methods are well suitable to those of ordinary skill in the art and therefore, detailed descriptions thereof will not be provided here.

In one or more embodiments, the cathode active material may be a composite cathode active material.

The composite cathode active material may include, for example: a core including a lithium transition metal oxide; and a shell conforming to a surface of the core, wherein the shell may include at least one first metal oxide represented by formula MₐO_{b} (0<a≤3 and 0<b<4, wherein if (e.g. when) a is 1, 2, or 3, b is not an integer); and graphene, wherein the first metal oxide may be provided within a graphene matrix, M is at least one metal selected from Groups 2 to 13, and Groups 15 and 16 in the Periodic Table of the Elements, the lithium transition metal oxide may contain nickel and a nickel content (e.g., amount) may be 80 mol% or more with respect to the total number of moles of the transition metal. The shell including the first metal oxide and graphene may be provided on the core of the composite cathode active material.

The graphene, due to agglomeration, may make it difficult to achieve a substantially uniform coating on the core. In some embodiments, because the composite cathode active material utilizes a composite including a plurality of first metal oxides provided in the graphene matrix, the shell may be provided uniformly on the core while agglomeration of graphene is inhibited. In some embodiments, by effectively preventing or reducing a contact between the core and the electrolyte, side reactions due to a contact between the core and the electrolyte may be inhibited. In some embodiments, reduction of nickel ions (Ni³⁺->Ni²⁺) and cation mixing by the electrolyte are suppressed or reduced, and thus, the formation of resistive layers, such as a NiO phase, may be suppressed or reduced. Furthermore, the elution of nickel ions may also be suppressed or reduced. The shell containing graphene has flexibility. In some embodiments, the volume change of the composite cathode active material during charging and discharging may be easily accommodated and thus, the occurrence of cracks inside the composite cathode active material may be suppressed or reduced. Due to high electronic conductivity of graphene, interfacial resistance between the composite cathode active material and the electrolyte may decrease. In some embodiments, despite the introduction of a shell including graphene, the internal resistance of the lithium battery may be maintained or reduced. In some embodiments, the first metal oxide has high-voltage resistance, and thus, deterioration of the lithium transition metal oxide included in the core during charging and discharging at a high voltage may be prevented or reduced. Consequently, a lithium battery including the composite cathode active material may have improved cycling performance and high-temperature stability. In some embodiments, the shell may include a single type or kind of first metal oxide, or two or more different types (kinds) of first metal oxides. In some embodiments, the lithium transition metal oxide in the composite cathode active material, despite having a high nickel content (e.g., amount) of 80 mol% or higher, may provide both (e.g., simultaneously) high discharge capacity and high cycling performance due to the shell containing the first metal oxide and graphene provided on the core. Therefore, the composite cathode active material having a high nickel content (e.g., amount) of 80 mol% or higher may still provide excellent or suitable lifespan characteristics while providing improved capacity compared to a composite cathode active material having a relatively lower nickel content (e.g., amount). The first metal oxide may include at least one metal selected from among Al, Nb, Mg, Sc, Ti, Zr, V, W, Mn, Fe, Co, Pd, Cu, Ag, Zn, Sb, and Se.

The first metal oxide may be, for example, at least one selected from among Al₂O_{z} (0<z<3), NbOₓ (0<x<2.5), MgOₓ (0<x<1), Sc₂O_{z} (0<z<3), TiO_{y} (0<y<2), ZrO_{y} (0<y<2), V₂O_{z} (0<z<3), WO_{y} (0<y<2), MnO_{y} (0<y<2), Fe₂O_{z} (0<z<3), Co₃O_{w} (0<w<4), PdOₓ (0<x<1), CuOₓ (0<x<1), AgOₓ (0<x<1), ZnOₓ (0<x<1), Sb₂O_{z} (0<z<3), and SeO_{y} (0<y<2). Because the first metal oxide is provided inside a graphene matrix, uniformity of the shell provided on the core may improve, and high-voltage resistance of the composite cathode active material may further improve. For example, the shell may include Al₂Oₓ (0<x<3) as the first metal oxide. The shell may further include one or more types (kinds) of second metal oxides, represented by MₐO_{c} (0<a≤3 and 0<c≤4, wherein if (e.g. when) a is 1, 2, or 3, c is an integer). M may be at least one metal selected from Groups 2 to 13, 15, and 16 of the Periodic Table of Elements. In one or more embodiments, the second metal oxide may include the same metal as in the first metal oxide, and the ratio c/a of a and c in the second metal oxide may have a greater value than the ratio b/a of a and b in the first metal oxide. In one or more embodiments, c/a > b/a may be satisfied. For example, the second metal oxide may be selected from among Al₂O₃, NbO, NbO₂, Nb₂O₅, MgO, Sc₂O₃, TiO₂, ZrO₂, V₂O₃, WO₂, MnO₂, Fe₂O₃, Co₃O₄, PdO, CuO, AgO, ZnO, Sb₂O₃, and SeO₂. The first metal oxide may be a reduction product of the second metal oxide. The first metal oxide may be obtained from a partial or complete reduction of the second metal oxide. Therefore, the first metal oxide may have a lower oxygen content (e.g., amount) and a higher oxidation number of the metal, relative to the second metal oxide. In one or more embodiments, the shell may include Al₂Oₓ (0<x<3) as the first metal oxide, and Al₂O₃ as the second metal oxide In the composite cathode active material, for example, the graphene included in the shell and a transition metal of the lithium transition metal oxide included in the core may be chemically bound via a chemical bond. The carbon atom (C) of the graphene included in the shell and the transition metal (Me) of the lithium transition metal oxide may be chemically bound by, for example, a C-O-Me bond via an oxygen atom (e.g., a C-O-Ni bond). Through chemical binding of the graphene included in the shell and the lithium transition metal oxide included in the core via a chemical bond, the core and the shell may be complexed (e.g., form a complex). Thus, the resulting complex may be distinguished from a simple physical mixture of graphene and lithium transition metal oxide. In some embodiments, the first metal oxide included in the shell and the graphene may be also chemically bound via a chemical bond. The chemical bond may be, for example, a covalent bond or an ionic bond. The covalent bond may be a bond that includes, for example, at least one of an ester group, an ether group, a carbonyl group, an amide group, a carbonate anhydride group, and an acid anhydride group. The ionic bond may be a bond that includes, for example, a carboxylate ion, an ammonium ion, an acyl cation group, and/or the like. The thickness of the shell may be, for example, about 1 nm to about 5 µm, about 1 nm to about 1 µm, about 1 nm to about 500 nm, about 1 nm to about 200 nm, about 1 nm to about 100 nm, about 1 nm to about 90 nm, about 1 nm to about 80 nm, about 1 nm to about 70 nm, about 1 nm to about 60 nm, about 1 nm to about 50 nm, about 1 nm to about 40 nm, about 1 nm to about 30 nm, about 1 nm to about 20 nm, or about 1 nm to about 10 nm. Due to the shell having these ranges of thickness, the increase in internal resistance of the lithium battery including the composite cathode active material may be suppressed or reduced or reduced.

The content (e.g., amount) of the composite included in the composite cathode active material may be 3 wt% or less, 2 wt% or less, 1 wt% or less, 0.5 wt% or less, or 0.2 wt% or less, with respect to the total weight of the composite cathode active material. The content (e.g., amount) of the composite may be about 0.01 wt% to about 3 wt%, about 0.01 wt% to about 1 wt%, about 0.01 wt% to about 0.7 wt%, about 0.01 wt% to about 0.6 wt%, about 0.1 wt% to about 0.5 wt%, about 0.01 wt% to about 0.2 wt%, about 0.01 wt% to about 0.1 wt%, or about 0.03 wt% to about 0.07 wt%, with respect to the total weight of the composite cathode active material. With the composite cathode active material including the composite in the described ranges, a lithium battery including the composite cathode active material may have further improved cycling performance. At least one selected from the first metal oxide and the second metal oxide included in the composite may have an average particle diameter (e.g., D50) of about 1 nm to about 1 µm, about 1 nm to about 500 nm, about 1 nm to about 200 nm, about 1 nm to about 100 nm, about 1 nm to about 70 nm, about 1 nm to about 50 nm, about 1 nm to about 30 nm, about 3 nm to about 30 nm, about 3 nm to about 25 nm, about 5 nm to about 25 nm, about 5 nm to about 20 nm, or about 7 nm to about 20 nm. As the first metal oxide and/or the second metal oxide have a particle diameter in the described nano-size ranges, the first metal oxide and/or the second metal oxide may be more uniformly distributed within the graphene matrix of the composite. In some embodiments, the composite may be uniformly coated on the core without agglomeration and form a shell. Further, as the first metal oxide and/or the second metal oxide have a particle diameter in the described ranges, the first metal oxide and/or the second metal oxide may be more uniformly provided on the core. In some embodiments, as the first metal oxide and/or the second metal oxide are uniformly provided on the core, high-voltage resistance may be more effectively achieved. Average particle diameters of the first metal oxide and the second metal oxide may be measured by a measurement device that utilizes a laser diffraction technique or a dynamic light scattering technique. The average particle diameter may be measured by, for example, a laser scattering particle size distribution analyzer (for example, LA-920 manufactured by HORIBA) and is a median particle diameter (D50) at a cumulative percentage of 50 vol% from the smallest particle size.

The core included in the composite cathode active material may include, for example, a lithium transition metal oxide represented by Formulas 1 to 8:

Formula 1 LiₐCoₓM_{y}O_{2-b}A_{b}

In Formula 1,
1.0≤a≤1.2, 0≤b≤0.2, 0.9≤x≤1, and 0≤y≤0.1, wherein x+y=1,
M may be manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminium (Al), boron (B), or a combination thereof, and
A may be F, S, Cl, Br, or a combination thereof,

   Formula 2 LiₐNiₓCo_{y}M_{z}O_{2-b}A_{b}

In Formula 2,
1.0≤a≤1.2, 0≤b≤0.2, 0.8≤x<1, 0≤y≤0.3, and 0<z≤0.3, wherein x+y+z=1,
M may be manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminium (Al), boron (B), or a combination thereof, and
A may be F, S, Cl, Br, or a combination thereof,

   Formula 3 LiNiₓCo_{y}Mn_{z}O₂

   Formula 4 LiNiₓCo_{y}Al_{z}O₂

In Formulas 3 and 4, 0.8≤x≤0.95, 0≤y≤0.2, 0<z≤0.2, and x+y+z=1,

Formula 5 LiNiₓCo_{y}Mn_{z}Al_{w}O₂

In Formula 5, 0.8≤x≤0.95, 0≤y≤0.2, 0≤z≤0.2, 0<w≤0.2, and x+y+z+w=1,

Formula 6 LiₐNiₓMn_{y}M'_{z}O_{2-b}A_{b}

In Formula 6,
1.0≤a≤1.2, 0≤b≤0.2, 0<x≤0.3, 0.5≤y<1, 0<z≤0.3, and x+y+z=1,
M' may be cobalt (Co), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminium (Al), boron (B), or a combination thereof,
A may be F, S, Cl, Br, or a combination thereof,

   Formula 7 LiₐM1ₓM2_{y}PO_{4-b}X_{b}

In Formula 7, 0.90≤a≤1.1, 0≤x≤0.9, 0≤y≤0.5, 0.9<x+y<1.1, and 0≤b≤2,
M1 may be chromium (Cr), manganese (Mn), iron (Fe), cobalt (Co), nickel (Ni), copper (Cu), zirconium (Zr), or a combination thereof,
M2 may be magnesium (Mg), calcium (Ca), strontium (Sr), barium (Ba), titanium (Ti), zinc (Zn), boron (B), niobium (Nb), gallium (Ga), indium (In), molybdenum (Mo), tungsten (W), aluminium (Al), silicon (Si), chromium (Cr), vanadium (V), scandium (Sc), yttrium (Y), or a combination thereof, and X may be O, F, S, P, or a combination thereof.

   Formula 8 LiₐM3_{z}PO₄

In Formula 8, 0.90≤a≤1.1 and 0.9≤z≤1.1, and
M3 may be chromium (Cr), manganese (Mn), iron (Fe), cobalt (Co), nickel (Ni), copper (Cu), zirconium (Zr), or a combination thereof.

In one or more embodiments, the content (e.g., amount) of the cathode active material included in the cathode active material layer may be about 80 wt% to about 98 wt%, or about 90 wt% to about 98 wt% with respect to the total weight of the cathode active material layer.

In one or more embodiments, the dry electrode 300 may be an anode. The anode may include an anode active material layer, and the anode active material layer may include an anode active material.

The anode active material may be any material utilized as an anode active material in a lithium battery in the art. For example, the anode active material may include at least one selected from among lithium metal, a metal alloyable with lithium, a transition metal oxide, a non-transition metal oxide, and a carbon-based material. Examples of the metal alloyable with lithium may include Si, Sn, Al, Ge, Pb, Bi, Sb, a Si-Y alloy (wherein Y is an alkali metal, an alkaline earth metal, an element of Group 13, an element of Group 14, a transition metal, a rare earth metal, or a combination thereof, but not Si), a Sn-Y alloy (wherein Y is an alkali metal, an alkaline earth metal, an element of Group 13, an element of Group 14, a transition metal, a rare earth metal, or a combination thereof, but not Sn) and/or the like. For example, Y may be Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, TI, Ge, P, As, Sb, Bi, S, Se, Te, Po, or a combination thereof (e.g. Mg, Ca, Sr, Ba, Sc, Y, Ti, Zr, Hf, V, Nb, Ta, Cr, Mo, W, Re, Fe, Pb, Ru, Os, Rh, Ir, Pd, Pt, Cu, Ag, Au, Zn, Cd, B, Al, Ga, Sn, In, TI, Ge, P, As, Sb, Bi, S, Se, Te, or a combination thereof). Examples of the transition metal oxide may include a lithium titanium oxide, a vanadium oxide, a lithium vanadium oxide, and/or the like. In one or more embodiments, the non-transition metal oxide may be SnO₂, SiOₓ (0<x<2), and/or the like. In one or more embodiments, the carbon-based material may be or include a crystalline carbon, an amorphous carbon, or a mixture thereof. Examples of the crystalline carbon may include graphite, such as artificial graphite or natural graphite in shapeless, plate, flake, spherical or fiber form. Examples of the amorphous carbon may include soft carbon (low-temperature calcined carbon) or hard carbon, mesophase pitch carbides, calcined cokes, and/or the like.

In one or more embodiments, the content (e.g., amount) of the anode active material included in the anode active material layer may be about 80 wt% to about 98 wt%, or about 90 wt% to about 98 wt% with respect to the total weight of the anode active material layer.

Materials constituting the electrode current collector 200 may be any conductive material that does not react with lithium, for example, those not forming an alloy or a compound with lithium. In one or more embodiments, the metal substrate may be a metal or an alloy. For example, the metal substrate may include (e.g., consist of) indium (In), copper (Cu), magnesium (Mg), stainless steel, titanium (Ti), iron (Fe), cobalt (Co), nickel (Ni), zinc (Zn), aluminium (Al), germanium (Ge), lithium (Li), or an alloy thereof. The electrode current collector 200 may have a structure (e.g., form) selected from a sheet, a foil, a film, a plate, a porous structure, a mesoporous structure, a through-hole containing structure, a polygonal ring, a mesh, a foam, and a nonwoven structure, but without being limited to the aforementioned examples, the electrode current collector 200 may have any form that is utilized in the art.

The electrode current collector 200 may have a reduced thickness compared to electrode collectors included in comparable electrodes. As such, an electrode disclosed herein, by including a thin-film current collector, may be distinguished from an electrode in the related art that includes a thick-film current collector. As an electrode according to one or more embodiments employs a thin-film current collector having a reduced thickness, the thickness of an electrode active material layer in the electrode including the thin-film current collector may relatively increase. As a result, a lithium battery employing the electrode may have increased energy density. In one or more embodiments, a thickness of the electrode current collector 200 including the metal substrate and the interlayer may be less than 15 µm, 14.5 µm or less, or 14 µm or less. In one or more embodiments, the thickness of the electrode current collector 200 may be about 0.1 µm to less than 15 µm, about 1 µm to about 14.5 µm, about 2 µm to about 14 µm, about 3 µm to about 14 µm, about 5 µm to about 14 µm, or about 10 µm to about 14 µm.

Materials constituting the electrode current collector 200 may be any conductive material that does not react (or does not substantially react) with lithium, for example, those not forming an alloy or a compound with lithium. In one or more embodiments, the electrode current collector 100 may be a metal or an alloy. In one or more embodiments, the electrode current collector 100 may include (e.g., consist of) indium (In), copper (Cu), magnesium (Mg), stainless steel, titanium (Ti), iron (Fe), cobalt (Co), nickel (Ni), zinc (Zn), aluminium (Al), germanium (Ge), lithium (Li), or an alloy thereof.

The electrode current collector 200 may have a structure (e.g., form) selected from a sheet, a foil, a film, a plate, a porous structure, a mesoporous structure, a through-hole containing structure, a polygonal ring, a mesh, a foam, and a nonwoven structure, but without being limited to the aforementioned examples, the electrode current collector 200 may have any form that is utilized in the art.

In some embodiments, the electrode current collector 200 may include, for example, a base film, and a metal layer provided on one surface or both (e.g., opposite) sides of the base film. In one or more embodiments, the electrode current collector 200 may include a substrate, and the substrate may have a structure including a base film and a metal layer provided on one side or both (e.g., opposite) sides of the base film. On the metal layer, the interlayer described may be further provided. The base film may include, for example, a polymer. For example, the polymer may be a thermoplastic polymer. For example, the polymer may include polyethylene terephthalate (PET), polyethylene (PE), polypropylene (PP), polybutylene terephthalate (PBT), polyimide (PI), or a combination thereof. Because the base film includes a thermoplastic polymer, the base film gets liquefied in the event of a short circuit, thereby preventing or reducing a rapid increase in electric current. For example, the base film may be an insulator. In one or more embodiments, the metal layer may include copper (Cu), stainless steel, titanium (Ti), iron (Fe), cobalt (Co), nickel (Ni), or an alloy thereof. In the event of an overcurrent, the metal layer may be disconnected, thus acting as an electrochemical fuse to provide protection against short circuits. A limiting current and a maximum current may be controlled or selected through controlling a thickness of the metal layer. The metal layer may be plated or deposited on the base film. Because the limiting current and/or maximum current of the electrode current collector 200 decrease as the thickness of the metal layer decreases, in this case, the stability of the lithium battery in case of a short circuit may improve. A lead-tab may be added on the metal layer for connection to the outside. The lead-tab may be welded to the metal layer or a metal layer/base film laminate by ultrasonic welding, laser welding, spot welding, and/or the like. As the base film and/or the metal layer melt during welding, the metal layer may be electrically connected to the lead-tab. For stronger welding between the metal layer and the lead-tab, a metal chip may be added between the metal layer and the lead-tab. The metal chip may be a flake of the same material as the metal of the metal layer. For example, the metal chip may be a metal foil, a metal mesh, and/or the like. For example, the metal chip may be an aluminium foil, a copper foil, an SUS foil, and/or the like. By welding the metal layer with the lead-tab after placing the metal chip on the metal layer, the lead-tab may be welded to a metal chip/metal layer laminate or a metal chip/metal layer/base film laminate. As the base film, the metal layer, and/or the metal chip melt during welding, the metal layer or the metal layer/metal chip laminate may be electrically connected to the lead-tab. A metal chip and/or a lead-tab may be further added on a part of the metal layer. In one or more embodiments, the base film may have a thickness of about 1 µm to about 50 µm, about 1.5 µm to about 50 µm, about 1.5 µm to about 40 µm, or about 1 µm to about 30 µm. With the base film having a thickness within the described ranges, the weight of the electrode assembly may be more effectively reduced. In one or more embodiments, the base film may have a melting point of about 100 °C to about 300 °C, about 100 °C to about 250 °C or less, or about 100 °C to about 200 °C. Because the base film has a melting point within the described ranges, the base film may easily melt and be bonded to the lead-tab while welding the lead-tab. To improve adhesion between the base film and the metal layer, a surface treatment such as corona treatment may be performed on the base film. In one or more embodiments, the metal layer may have a thickness of about 0.01 µm to about 3 µm, about 0.1 µm to about 3 µm, about 0.1 µm to about 2 µm, or about 0.1 µm to about 1 µm. With the metal layer having a thickness within the described ranges, the electrode assembly may provide stability while maintaining conductivity. In one or more embodiments, the metal chip may have a thickness of about 2 µm to about 10 µm, about 2 µm to about 7 µm, or about 4 µm to about 6 µm. With the metal chip having a thickness within the described ranges, the metal layer and the lead-tab may be more easily connected. Because the electrode current collector 200 has such a structure, the weight of the electrode may be reduced and as a result, energy density thereof may improve. In one or more embodiments, the electrode current collector 200 may be a cathode current collector. In one or more embodiments, the electrode current collector 200 may be an anode current collector.

The dry electrode 300 may further include an interlayer (not illustrated) provided between the electrode active material layer 100 and the electrode current collector.

In one or more embodiments, the interlayer may be directly provided on one side or both (e.g., opposite) sides of the electrode current collector. In some embodiments, there may be no other layers provided between the electrode current collector and the interlayer. With the interlayer directly provided on one side or both (e.g., opposite) sides of the electrode current collector, adhesion between the substrate and the electrode active material layers may further improve.

In one or more embodiments, the thickness of the interlayer may be 30 % or less with respect to the thickness of the electrode current collector. In one or more embodiments, the thickness of the interlayer may be about 0.01 % to about 30 %, about 0.1 % to about 30 %, about 0.5 % to about 30 %, about 1 % to about 25 %, about 1 % to about 20 %, about 1 % to about 15 %, about 1 % to about 10 %, about 1 % to about 5 %, or about 1 % to about 3 %, with respect to the thickness of the electrode current collector. In one or more embodiments, the thickness of the interlayer may be about 10 nm to about 5 µm, about 50 nm to about 5 µm, about 200 nm to about 4 µm, 500 nm to about 3 µm, about 500 nm to about 2 µm, about 500 nm to about 1.5 µm, or about 700 nm to about 1.3 µm. With the interlayer having a thickness in the described ranges, adhesion between the electrode current collector and the electrode active material layer may further improve, and an increase of interfacial resistance may be reduced or suppressed.

In one or more embodiments, the interlayer may include a binder. Due to the interlayer including a binder, adhesion between the electrode current collector and the electrode active material layers may further improve. In one or more embodiments, the binder included in the interlayer may be a conductive binder or a non-conductive binder.

In one or more embodiments, the conductive binder may be an ionically conductive binder and/or an electronically conductive binder. A binder having both (e.g., simultaneously) ion conductivity and electron conductivity may be considered as belonging to both (e.g., simultaneously) ionically conductive binders and electronically conductive binders.

In one or more embodiments, the ionically conductive binder may be or include polystyrene sulfonate (PSS), a polyvinylidene fluoride-hexafluoropropylene copolymer (PVDF-HFP), polyvinyl fluoride (PVF), polyvinylidene fluoride (PVDF), poly(methylmethacrylate) (PMMA), polyethylene oxide (PEO), polyethylene glycol (PEG), polyacrylonitrile (PAN), polytetrafluoroethylene (PTFE), polyethylene deoxythiophene (PEDOT), polypyrrole (PPY), polyacrylonitrile (PAN), polyaniline, polyacetylene, and/or the like. The ionically conductive binder may include polar functional groups. Examples of the ionically conductive binder containing polar functional groups may include Nafion, Aquivion, Flemion, Gore, Aciplex, Morgane ADP, sulfonated poly(ether ether ketone) (SPEEK), sulfonated poly(arylene ether ketone ketone sulfone) (SPAEKKS), sulfonated poly(aryl ether ketone) (SPAEK), poly[bis(benzimidazobenzisoquinolinones)] (SPBIBI), poly(styrene sulfonate) (PSS), lithium 9,10-diphenylanthracene-2-sulfonate (DPASLi+), and/or the like. Examples of the electronically conductive binder may include polyacetylene, polythiophene, polypyrrole, poly(p-phenylene), poly(phenylenevinylene), poly(phenylenesulfide), polyaniline, and/or the like. In one or more embodiments, the interlayer may be a conductive layer including a conductive polymer.

In one or more embodiments, the binder included in the interlayer may be selected from the binders included in the electrode active material layers. The interlayer may include the same binder as the electrode active material layer. In one or more embodiments, the binder included in the interlayer may be a fluorinated binder. In one or more embodiments, the fluorinated binder included in the interlayer may be polyvinylidene fluoride (PVDF). The interlayer may be provided on the electrode current collector by, for example, a dry method or a wet method. In one or more embodiments, the interlayer may be an adhesive layer including a binder.

In one or more embodiments, the interlayer may further include a carbon-based conductive material. The carbon-based conductive material included in the interlayer may be selected from the carbon-based conductive materials included in the electrode active material layer. The interlayer may include the same carbon-based conductive material as the electrode active material layer. Due to the carbon-based conductive material included in the interlayer, the interlayer may be, for example, a conductive layer. In one or more embodiments, the interlayer may be a conductive layer that includes a binder and a carbon-based conductive material.

The interlayer may be provided on an electrode current collector by a dry method, for example, deposition such as chemical vapor deposition (CVD), physical vapor deposition (PVD), and/or the like. The interlayer may be provided on an electrode current collector by a wet method, for example, spin coating, dip coating, and/or the like. In one or more embodiments, the interlayer may be provided on an electrode current collector by deposition of a carbon-based conductive material on the electrode current collector. The dry-coated interlayer may be composed of a carbon-based conductive material and may not contain a binder. In another embodiment, the interlayer may be provided on an electrode current collector by having a composition containing a carbon-based conductive material, a binder, and a solvent, coated and dried on the surface of the electrode current collector. The interlayer may be a monolayer structure or a multilayer structure including a plurality of layers.

According to another embodiment, the lithium battery may include: a cathode; an anode; and an electrolyte provided between the cathode and the anode, wherein at least one of the cathode and/or the anode may be a dry electrode 300, and the dry electrode 300 may include the dry electrode film 150 described .

Because the lithium battery includes at least one of the cathode and the anode, including the dry electrode film 150, the cycling performance, for example, high-rate capability of the lithium battery may improve.

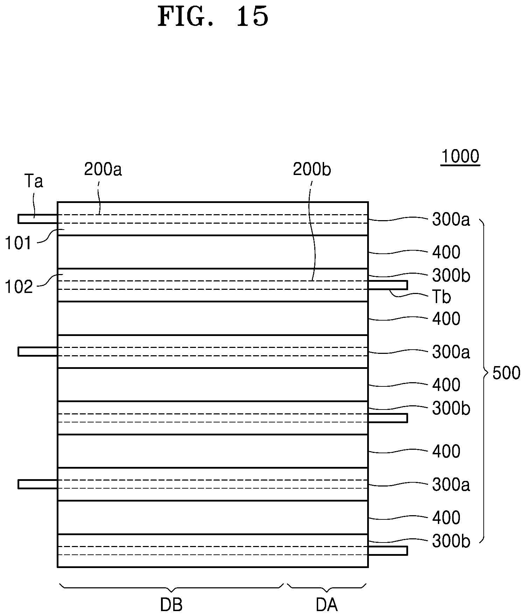

Referring to FIGS. 15 to 17, a lithium battery 1000 may include: a cathode 300a; an anode 300b; and an electrolyte 400 provided between the cathode 300a and the anode 300b, wherein at least one of the cathode 300a and the anode 300b may be the electrode described. The lithium battery 1000 may include an electrode assembly 500.

Referring to FIG. 15, the electrode assembly 500 may include: a plurality of cathodes 300a stacked along a thickness direction; a plurality of anodes 300b each provided between the plurality of cathodes 300a; and a plurality of electrolytes 400 each provided between the plurality of cathodes 300a and anodes 300b. The cathode 300a may include a cathode current collector 200a, the cathode current collector 200a may include a cathode tab Ta extending out of a cathode active material layer 101 through one side surface of the electrode assembly 500, the anode 300b may include an anode current collector 200b, and the anode current collector 200b may include an anode tab Tb extending out of an anode active material layer 102 through the other side surface opposite to the one side surface of the electrode assembly 500. The lithium battery 1000 may include the electrode assembly 500. Because the cathode tab Ta and the anode tab Tb are provided on two side surfaces opposite to each other, the likelihood of a short circuit occurring between the cathode tab Ta and the anode tab Tb may decrease.

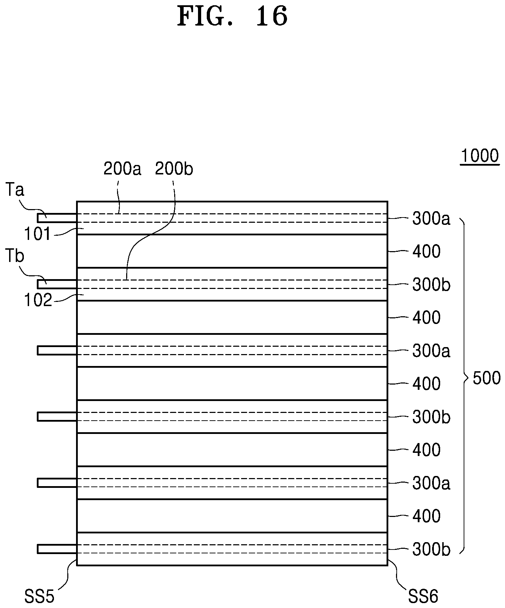

Referring to FIG. 16, the electrode assembly 500 may include: a plurality of cathodes 300a stacked along a thickness direction; a plurality of anodes 300b each provided between the plurality of cathodes 300a; and a plurality of electrolytes 400 each provided between the plurality of cathodes 300a and anodes 300b. The cathode 300a may include a cathode current collector 200a, the cathode current collector 200a may include a cathode tab Ta extending out of a cathode active material layer 101 through one side surface of the electrode assembly 500, the anode 300b may include an anode current collector 200b, and the anode current collector 200b may include an anode tab Tb extending out of an anode active material layer 102 through the same one side surface of the electrode assembly 500. The lithium battery 1000 may include the electrode assembly 500.

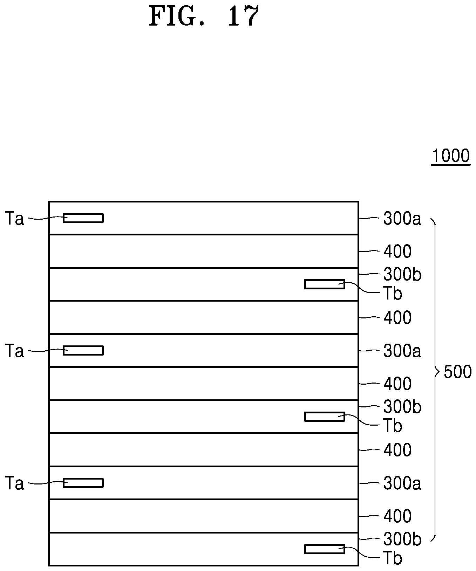

Referring to FIG. 17, on one side surface SS5, a plurality of cathode tabs Ta may be provided and spaced and/or apart at a substantially uniform interval in a thickness direction, and a plurality of anode tabs Tb may be provided and spaced and/or apart at a substantially uniform interval in the thickness direction. The plurality of cathode tabs Ta may be provided adjacent to one side surface of a width direction of the electrode assembly 500, and the plurality of anode tabs Tb may be provided adjacent to the other side surface of the width direction of the electrode assembly 500. FIG. 17 is a front view of one side surface the electrode assembly illustrated in FIG. 16, from which an electrode tab is protruded. The lithium battery 1000 may include the electrode assembly 500.

The cathode tabs Ta and the anode tabs Tb are provided on the same side surface; however, because they are spaced and/or apart from each other in the width direction, the likelihood of a short circuit occurring between the cathode tabs Ta and the anode tabs Tb may decrease.

The lithium battery 1000 may be, for example, a lithium primary battery or a lithium secondary battery. The lithium battery 1000 may be, for example, a lithium-ion battery, a lithium solid battery, a lithium air battery, and/or the like.

The electrolyte included in the lithium battery 1000 may be, for example, a liquid electrolyte or a solid electrolyte. The lithium battery 1000 may be, for example, a lithium-ion battery, a lithium solid battery, a lithium air battery, and/or the like.

A method of preparing a dry electrode film 150 according to another embodiment is provided.

Referring to FIG. 18, a method for preparing a dry electrode film 150 may include: preparing a first dry composition including a first dry electrode active material; preparing a second dry composition including a second dry electrode active material; preparing a third dry composition including a third dry electrode active material; and concurrently (e.g., simultaneously) introducing the first dry composition, the second dry composition, and the third dry composition between a pair of rolls, wherein the first dry composition, the third dry composition, and the second dry composition are arranged in this order along a length direction of the pair of rolls to form a dry electrode film, wherein a first region D1 is formed from the first dry composition, a second region D2 is formed from the second dry composition, a third region D3 is formed from the third dry composition, and a third porosity of the third region D3 is smaller than a first porosity of the first region D1 and a second porosity of the second region D2. By the method of preparing a dry electrode film, a dry electrode film may be prepared in which the first region D1 including the first dry electrode active material is provided at one side of a width direction of the dry electrode film, the second region D2 including the second dry electrode active material is provided at the other side, and the third region D3 including the third dry electrode active material is provided between the first region D1 and the second region D2.

A first dry composition including the first dry electrode active material may be prepared.

First, the first dry composition may be prepared by dry-mixing a first dry electrode active material and a first dry binder. For more details of the first dry electrode active material, refer to the description of the dry electrode film 150. The term "dry-mixing" refers to a process of mixing without utilizing processing solvents. A processing solvent may be a solvent utilized in the preparation of electrode slurry, for example. For example, the process solvent may be water, NMP, and/or the like, but is not limited thereto and may be any process solvent for utilize in the preparation of electrode slurry. The dry-mixing may be carried out utilizing an agitator, for example, at a temperature of about 25 °C to about 65 °C. The dry-mixing may be carried out utilizing an agitator at a rotation rate of, for example, about 10 rpm to about 10,000 rpm, or about 100 rpm to about 1,000 rpm. The dry-mixing may be carried out utilizing an agitator for a duration of about 1 minute to about 200 minutes, or about 1 minute to about 150 minutes, for example.

The first dry mixture may further include a first dry conductive material. By further including the first conductive material, the electrode active material layer 100 may have decreased internal resistance.

The dry-mixing may be carried out, for example, once or more. First, an intermediate dry mixture may be prepared by first dry-mixing of the first dry electrode active material, the first dry conductive material, and the first dry binder. The first dry-mixing may be carried out, for example, at a temperature of about 25 °C to about 65 °C, at a rotation rate of 2,000 rpm or less, for a duration of 15 minutes or less. For example, the first dry-mixing may be carried out at a temperature of about 25 °C to about 65 °C, at a rotation rate of about 500 rpm to about 2,000 rpm, for a duration of about 5 minutes to about 15 minutes. Through the first dry-mixing, the first dry electrode active material, the first dry conductive material, and the first dry binder may be uniformly mixed. Subsequently, a first dry mixture may be prepared through second dry-mixing of the first dry electrode active material, the first dry conductive material, and the first dry binder. For example, the second dry-mixing may be carried out at a temperature of about 25 °C to about 65 °C, at a rotation rate of 2,000 rpm or less, for a duration of 15 minutes or less. For example, the second dry-mixing may be carried out at a temperature of about 25 °C to about 65 °C, at a rotation rate of about 4,000 rpm to about 9,000 rpm, for a duration of about 10 minutes to about 60 minutes. Through the second dry-mixing, a first dry electrode composition containing a fibrillized dry binder may be obtained.

The agitator may be, for example, a kneader. The agitator may include, for example, a chamber; at least one rotary shaft rotating provided inside the chamber; and a blade rotatably coupled to the rotary shaft and arranged in a longitudinal direction of the rotary shaft. The blade may be, for example, one or more selected from among a ribbon blade, a sigma blade, a Z blade, a dispersing blade, and a screw blade. By including the blade, a dough-like mixture may be prepared, even without utilizing solvent, by effectively mixing the electrode active material, dry conductive material, and the dry binder.

Examples of the first dry conductive material may include: Denka black, carbon black, graphite powder, natural graphite, artificial graphite, acetylene black, Ketjen black, and carbon fibers; carbon nanotubes; metal powder, metal fibers, or metal tubes, such as copper, nickel, aluminium, silver, and/or the like; and conductive polymers such as polyphenylene derivatives and/or the like. However, the first dry conductive material is not limited to the aforementioned examples and may be any material available as a conductive material in the art. In one or more embodiments, the conductive material may be a carbon-based conductive material.

As the first dry binder, a vinylidene fluoride/hexafluoropropylene copolymer, polyvinylidene fluoride, polyacrylonitrile, polymethyl methacrylate, polytetrafluoroethylene (PTFE), a mixture of the described polymers, and/or a styrene butadiene rubber polymer may be utilized, but the present disclosure is not limited thereto. Any suitable binder in the art may be utilized. As the solvent, N-methylpyrrolidone (NMP), acetone, and/or water may be utilized, but without necessarily being limited thereto, any solvent available in the art may be utilized.

It is also possible to additionally create pores in the dry electrode film 150 by further adding a plasticizer or a pore former to the first dry mixture.

The amount of each of the first dry electrode active material, the first dry conductive material, and the first dry binder utilized in the first dry mixture may be the same as described with respect to the dry electrode 300.

A cathode utilizes a cathode active material as an electrode active material. For the cathode active material, refer to the electrode described. An anode utilizes an anode active material as an electrode active material. For the anode active material, refer to the electrode described.

The preparation of the second dry composition including the second dry electrode active material, and the preparation of the third dry composition including the third dry electrode active material may be conducted following the same process of the preparation of the first dry composition, except that instead of the first dry electrode active material, the second dry electrode active material and the third dry electrode active material are utilized, respectively.

Next, by concurrently (e.g., simultaneously) introducing the first dry composition, the second dry composition, and the third dry composition between a pair of rolls, such that the first dry composition, the third dry composition, and the second dry composition are arranged in this order along a length direction of the pair of rolls, to form the dry electrode film 150.

Referring to FIG. 18, the dry electrode film 150 may be formed by having the first dry composition, the second dry composition, the third dry composition passed through a pair of calendar rolls spaced and/or apart from each other at a substantially uniform interval, such that the first dry composition, the third dry composition, and the second dry composition are arranged in this order along a length direction of the pair of calendar rolls while being passed therethrough. As the first dry composition, the third dry composition, and the second dry composition are arranged in this order along the length direction of the pair of calendar rolls while being passed between the calendar rolls, the dry electrode film 150 including the first region D1, the second region D2, and the third region D3 provided therebetween may be formed. As the dry compositions are rolled by passing through the calendar rolls, the dry electrode film 150 may be formed and include a dry binder that is fibrillized in a travelling direction of the dry electrode film 150, e.g., machine direction MD. The dry electrode film 150 may include a dry binder that is fibrillized in the machine direction MD. In one or more embodiments, the dry electrode film 150 may be a self-standing film.

In one or more embodiments, the first dry composition, the third dry composition, and the second dry composition may be fed between the pair of rolls, from a mixture feeder 10, which is compartmentalized by partitions 11, 11a, 11b. By controlling the number of partitions included in the mixture feeder, the number of regions included in the dry electrode film may be controlled or selected. As the number of regions included in the dry electrode film increases, it may be possible to control such that the dry electrode film has one or more suitable porosity distributions. By controlling the locations of partitions included in the mixture feeder, the widths of the respective regions included in the dry electrode film may be determined. By altering the widths of the respective regions included in the dry electrode film, it may be possible to control such that the dry electrode film has one or more suitable porosity distributions. For example, the dry electrode active materials included in the first dry composition, the third dry composition, the second dry composition, and/or the like, may be the same or different from each other. For example, the dry binders included in the first dry composition, the third dry composition, the second dry composition, and/or the like, may be the same or different from each other. For example, the dry conductive materials included in the first dry composition, the third dry composition, the second dry composition, and/or the like, may be the same or different from each other. In one or more embodiments, by altering the average particle diameters, compositions, contents, and/or the like of the dry electrode active materials in the plurality of dry compositions fed into the mixture feeder, the porosity of a dry electrode film being produced may be controlled or selected. In one or more embodiments, by further adding a pore former to the plurality of dry compositions being fed into the mixture feeder, the porosity of a dry electrode film being produced may be controlled or selected.

The dry electrode film 150 may be further rolled. The rolling may be performed by for example, a roll press, a flat press, and/or the like but is not necessarily limited thereto. The pressure during rolling may be, for example, about 1.0 ton/cm² to about 10.0 ton/cm². If (e.g., when) the pressure during rolling excessively increases, a crack may form in the dry electrode film 150. If (e.g., when) the pressure during rolling is excessively low, the rolling effect may be insufficient.

A method of preparing an electrode according to another embodiment is provided.

An electrode preparation method may include: providing an electrode current collector; and providing a dry electrode film 150 on one side or both (e.g., opposite) sides of the electrode current collector.

First, an electrode current collector may be provided.

The electrode current collector may further include a coating layer provided on one side or both (e.g., opposite) sides of the electrode current collector. In one or more embodiments, the providing of an electrode current collector may further include disposing a coating layer on one side or both (e.g., opposite) sides of the electrode current collector. For the materials of the electrode current collector, refer to the electrode current collector described. In one or more embodiments, the cathode current collector may be an aluminium foil. In one or more embodiments, the anode current collector may be a copper foil. The disposing of a coating layer on one side or both (e.g., opposite) side of the electrode current collector may be carried out by disposing the coating layer, by a wet method or a dry method, on one side or both (e.g., opposite) sides of the electrode current collector. For more details of the coating method, refer to the description of the electrode current collector including the coating layer described.

Next, an electrode may be prepared by disposing the dry electrode film 150 on one side or both (e.g., opposite) sides of the electrode current collector. In one or more embodiments, an electrode maybe prepared by laminating the dry electrode film 150 on the electrode current collector.

The electrode prepared by the electrode preparation method described may include: an electrode current collector; and an electrode provided on one side or both (e.g., opposite) sides of the electrode current collector, wherein an electrode active material layer includes the dry electrode film 150.

A lithium battery may be prepared by the method described as an example; however, the method of preparing the lithium battery is not necessarily limited to this method and may vary according to conditions required.

First, both (e.g., simultaneously) a cathode and an anode may be prepared according to the electrode preparation method and the dry electrode film 150 described. In another embodiment, if (e.g., when) one electrode from a cathode and an anode is prepared by the dry electrode preparation method described, the other electrode may be prepared by a wet preparation method. For example, the other electrode may be prepared by preparing an electrode slurry containing an electrode active material, a conductive material, a binder, and a solvent, and then coating and drying the prepared electrode slurry on an electrode current collector. The conductive material and the binder included in the electrode prepared by the wet method may be selected from the conductive materials and binders utilized in the preparation of dry electrodes described.

Next, a separator to be positioned between the cathode and the anode may be prepared.

The separator may be any separator commonly utilized in lithium batteries. For example, the separator may be a separator capable of retaining a large quantity of electrolyte solution, while exhibiting low resistance to ion migration in electrolyte. For example, the separator may be formed of a material selected from among glass fiber, polyester, Teflon, polyethylene, polypropylene, polytetrafluoroethylene (PTFE), or a combination thereof that is in the form of non-woven fabric or woven fabric. A lithium ion battery may utilize, for example, a rollable separator formed of polyethylene, polypropylene, and/or the like. A lithium-ion polymer battery may utilize, for example, a separator capable of retaining a large quantity of an organic electrolyte solution.

The separator may be prepared by the method described as an example. However, the method by which to prepare the separator is not necessarily limited to this method but may be adjusted according to conditions required.

First, a separator composition may be prepared by mixing a polymer resin, a filler, and a solvent. The separator composition may be directly coated and dried on top of an electrode to thereby form a separator. In some embodiments, the separator may be formed by casting and drying the separator composition on a support and then laminating, on top of an electrode, a separator film exfoliated from the support.

The polymer utilized in the preparation of the separator is not particularly limited and utilize any polymer available for utilize in a binder of an electrode plate. In one or more embodiments, the polymer may utilize a vinylidene fluoride/hexafluoropropylene copolymer, polyvinylidene fluoride (PVDF), polyacrylonitrile, polymethyl methacrylate, or a mixture thereof.

Next, an electrolyte may be prepared.

In one or more embodiments, the electrolyte may be an organic electrolyte. The organic electrolyte may be prepared by dissolving a lithium salt in an organic solvent.

For the organic solvent, any organic solvent available in the art may be utilized. Examples of the organic solvent may include propylene carbonate, ethylene carbonate, fluoroethylene carbonate, butylene carbonate, dimethyl carbonate, diethyl carbonate, methyl ethyl carbonate, methyl propyl carbonate, ethyl propyl carbonate, methyl isopropyl carbonate, dipropyl carbonate, dibutyl carbonate, benzonitrile, acetonitrile, tetrahydrofuran, 2-methyltetrahydrofuran, γ-butyrolactone, dioxolane, 4-methyldioxolane, N,N-dimethylformamide, dimethylacetamide, dimethyl sulfoxide, dioxane, 1,2-dimethoxyethane, sulfolane, dichloroethane, chlorobenzene, nitrobenzene, diethylene glycol, dimethyl ether, and mixtures thereof.

For the lithium salt, any lithium salt available in the art may be utilized. For example, the lithium salt may be LiPF₆, LiBF₄, LiSbF₆, LiAsF₆, LiClO₄, LiCFsSOs, Li(CF₃SO₂)₂N, LiC₄F₉SO₃, LiAlO₂, LiAlCl₄, LiN(CₓF₂ₓ₊₁SO₂)(C_{y}F_{2y+1}SO₂) (wherein x and y are natural numbers), LiCl, Lil, or a mixture thereof.

In some embodiments, the electrolyte may be a solid electrolyte. In one or more embodiments, the solid electrolyte may be a boron oxide, a lithium oxynitride, and/or the like, but is not limited thereto and may be any solid electrolyte available in the art. The solid electrolyte may be formed on the anode by methods such as sputtering, for example, or a separate solid electrolyte sheet may be stacked on the anode. In one or more embodiments, the solid electrolyte may be an oxide-based solid electrolyte or a sulfide-based solid electrolyte.

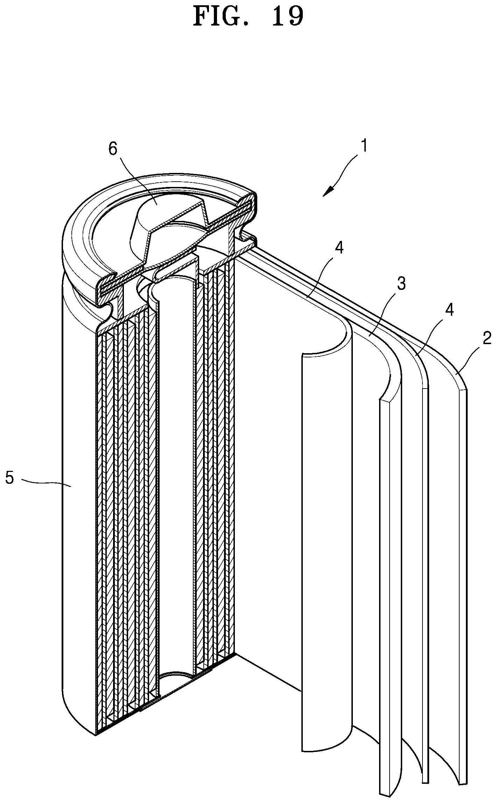

Referring to FIG. 19, a lithium battery 1 according to one or more embodiments may include a cathode 3, an anode 2, and a separator 4. The cathode 3, the anode 2, and the separator 4 may be wound or folded to form a battery structure 7. The battery structure 7 may be accommodated in a battery case 5. The battery case 5 may be injected with an organic electrolyte and sealed with a cap assembly 6, thereby completing the preparation of the lithium battery 1. The battery case 5 may be a cylindrical type or kind, but without being necessarily limited thereto, may be a prismatic type or kind, a thin-film type or kind, and/or the like.

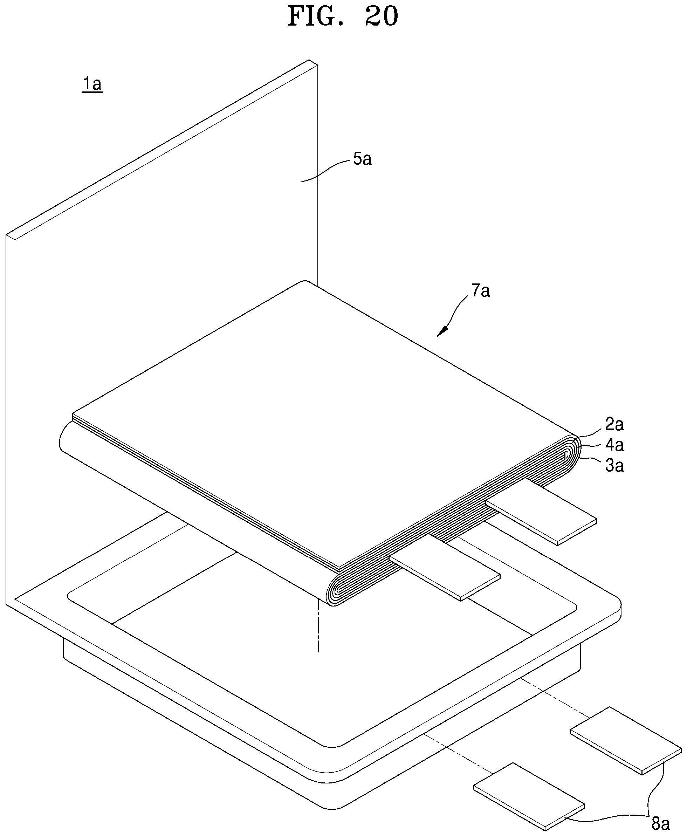

Referring to FIG. 20, a lithium battery 1a according to one or more embodiments may include a cathode 3a, an anode 2a, and a separator 4a. The separator 4a may be provided between the cathode 3a and the anode 2a, and the cathode 3a, the anode 2a, and the separator 4a may be wound or folded to form a battery structure 7a. The battery structure 7a may be accommodated in the battery case 5a. An electrode tab 8a, acting as an electrical path for guiding an electrical current generated in the battery structure 7a to the outside, may be included. The battery case 5 may be injected with an organic electrolyte and sealed, thereby completing the preparation of the lithium battery 1a. The battery case 5a may be a prismatic type or kind, but without being necessarily limited thereto, may also be, for example, a cylindrical type or kind, a thin-film type or kind, and/or the like.

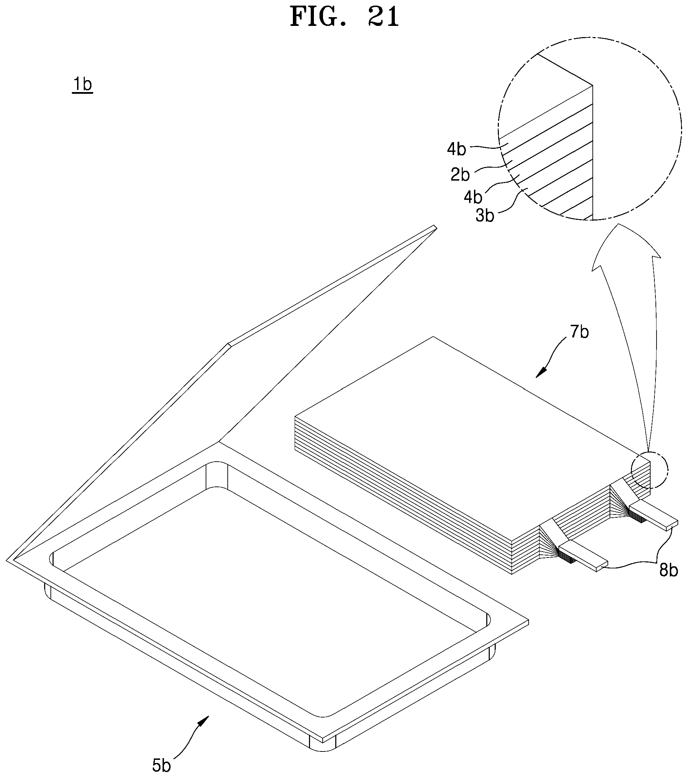

Referring to FIG. 21, a lithium battery 1b according to one or more embodiments may include a cathode 3b, an anode 2b, and a separator 4b. The separator 4b may be provided between the cathode 3b and the anode 2b to form a battery structure. The battery structure 7b may be stacked in a bi-cell structure and then accommodated into the battery case 5b. An electrode tab 8b, acting as an electrical path for guiding an electrical current generated in the battery structure 7b to the outside, may be included. The battery case 5b may be injected with an organic electrolyte solution and sealed to thereby complete the preparation of the lithium battery 1b. The battery case 5b may have a polygonal shape, but without being necessarily limited thereto, may also have a cylindrical shape, a thin-film shape, and/or the like, for example.

A pouch-type or kind lithium battery corresponds to the lithium battery shown in FIGS. 19 to 21 that uses a pouch as a battery case. The pouch-type or kind lithium battery may include one or more battery structures. The battery structure may be formed by disposing a separator between a cathode and an anode. The battery structures may be stacked in a bi-cell structure, and immersed in an organic electrolyte, and then accommodated and sealed in a pouch, thereby completing the preparation of a pouch-type or kind lithium battery. For example, although not illustrated in the drawings, the cathode, the anode, and the separator described may be simply stacked in the form of an electrode assembly and then accommodated in a pouch, or may be wound or folded into a jelly roll-type or kind electrode assembly and then accommodated in a pouch. Subsequently, the pouch may be injected with an organic electrolyte and then sealed, thereby completing the preparation of a lithium battery.

The lithium battery due to having excellent or suitable lifespan characteristics and high-rate capability may be utilized in an electric vehicle (EV), for example. For example, the lithium battery may be utilized in a hybrid vehicle, such as a plug-in hybrid electric vehicle (PHEV) and/or the like. Also, the lithium battery may be utilized in any field that requires a large amount of energy storage. For example, the lithium battery may be utilized in an electric bicycle, a power tool, and/or the like.

Multiple units of the lithium battery may be stacked together to form a battery module, and multiple units of the battery module may form a battery pack. Such a battery pack may be utilized in all types (kinds) of devices in which high capacity and high output are required. For example, the battery pack may be utilized in a laptop computer, a smartphone, an electric vehicle, and/or the like. The battery module may include, for example, a plurality of batteries and a frame holding the batteries. The battery pack may include, for example, a plurality of battery modules and a bus bar connecting these battery modules. The battery module and/or the battery pack may further include a cooling device. A plurality of battery packs may be controlled or selected by a battery management system. The battery management system may include a battery pack, and a battery control device connected to the battery pack.

Terms such as "substantially," "about," and "approximately" are used as relative terms and not as terms of degree, and are intended to account for the inherent deviations in measured or calculated values that would be recognized by those of ordinary skill in the art. They may be inclusive of the stated value and an acceptable range of deviation as determined by one of ordinary skill in the art, considering the limitations and error associated with measurement of that quantity. For example, "about" may refer to one or more standard deviations, or ± 30%, 20%, 10%, 5% of the stated value.

Numerical ranges disclosed herein include and are intended to disclose all subsumed sub-ranges of the same numerical precision. For example, a range of "1.0 to 10.0" includes all subranges having a minimum value equal to or greater than 1.0 and a maximum value equal to or less than 10.0, such as, for example, 2.4 to 7.6. Applicant therefore reserves the right to amend this specification, including the claims, to expressly recite any sub-range subsumed within the ranges expressly recited herein.

The present disclosure will be described in greater detail through Examples and Comparative Examples. However, it will be understood that the following examples are provided merely to illustrate the present disclosure, and should not be construed as limiting the scope of the present disclosure.

### EXAMPLES

### Preparation of Lithium Battery (Half Cell)

### Example 1: Three regions, [(First region (20 %, small-diameter NCM) / Third region (60 %, large-diameter NCM) / Second region (20 %, small-diameter NCM)]

### First Region-Forming Electrode Composition

Small-diameter LiNi_{0.896}Co_{0.072}Mn_{0.032}O₂ having an average particle diameter (D50) of 3.5 µm (hereinafter referred to as small-diameter NCM) as a first dry cathode active material, Denka Black as a dry conductive material, and polytetrafluoroethylene (PTFE) as a conductive binder were introduced in a weight ratio of 96:2:2 into a blade mixer and subjected to first dry mixing at 25 °C at a rate of 900 rpm for 12 minutes, to prepare a first mixture in which the cathode active material, the conductive material, the binder were uniformly mixed. Subsequently, to allow a sufficient fibrillization process of the binder, the first mixture was further subjected to second mixing at 25 °C at 4,000 rpm for 22 minutes, to prepare a second mixture. No solvent was utilized in the preparation of the first mixture and the second mixture.

### Second Region-Forming Electrode Composition

A second region-forming electrode composition was prepared following the same process as the first region-forming electrode composition.

### Third Region-Forming Electrode Composition

Large-diameter LiNi_{0.896}Co_{0.072}Mn_{0.032}O₂ having an average particle diameter (D50) of 14 µm (hereinafter referred to as large-diameter NCM) as a third dry cathode active material, Denka Black as a dry conductive material, and polytetrafluoroethylene (PTFE) as a conductive binder were introduced in a weight ratio of 96:2:2 into a blade mixer and subjected to first dry mixing at 25 °C at a rate of 900 rpm for 12 minutes, to prepare a third mixture in which the cathode active material, the conductive material, the binder were uniformly mixed. Subsequently, to allow a sufficient fibrilization process of the binder, the third mixture was further subjected to second mixing at 25 °C at 4,500 rpm for 22 minutes, to prepare a fourth mixture. No solvent was utilized in the preparation of the third mixture and the fourth mixture.

### Cathode Film Preparation

Using a mixture feeder including three compartments separated by partitions, the fourth mixture, which is the third region-forming electrode composition, was loaded into the middle compartment, and a first region-forming composition and a second region-forming composition, which have the same composition, were loaded into the two end compartments, respectively. The second mixture/fourth mixture/second mixture being fed from the mixture feeder were concurrently (e.g., simultaneously) loaded and calendared between a first calendar roll and a second calendar roll of a rolling device, to prepare a dry cathode sheet. The prepared dry cathode sheet was rolled to prepare a dry cathode film. The dry cathode film was a self-standing film without support.

The dry cathode film has a structure including the first region and the second region, which are respectively at or adjacent to the two or both (e.g., opposite) side surfaces of a width direction (e.g., transverse direction, TD) that is perpendicular to a length direction (e.g., machine direction, MD), and further including a third region provided between the first region and the second region.

The total width of the dry cathode film was 100 mm, and the width W3 of the third region was 60 mm (60 %), the width W1 of the first region and the width W2 of the second region were each 20 mm (20 %). The thickness T of the dry cathode film was about 100 µm.

The step G between a first point of contact between one side surface of the dry cathode film in the width direction and one surface of the dry cathode film in the thickness direction, and a second point of contact between the one side surface and the opposite surface opposite to the one surface, was less than 10 % of the thickness of the dry cathode film. In some embodiments, on a cross-section of the dry cathode film, the side surface forms a near-normal angle with respect to top surface or bottom surface of the dry cathode film.

### Preparation of Dry Cathode

A cathode current collector with a carbon layer provided as a coating layer on one side of a 12 µm-thick aluminium thin film was prepared. The coating layer may be considered as an interlayer.

The carbon layer was prepared by coating and drying a composition containing Denka black and polyvinylidene fluoride (PVDF) on an aluminium thin film. The thickness of the carbon layer provided on one side of the aluminium thin film was about 1 µm.

A dry cathode film was provided on the carbon layer side of the cathode current collector to thereby produce a dry cathode in which an interlayer and a cathode active material layer are sequentially provided on the cathode current collector. The thickness of the cathode active material layer was about 100 µm.

### Preparation of Lithium Battery

A coin cell was prepared utilizing the cathode prepared , and utilizing lithium metal as a counter electrode, a PTFE separator, and a solution containing 1.3 M LiPF₆ dissolved in ethylene carbonate (EC) + ethyl methyl carbonate (EMC) + dimethyl carbonate (DMC) (volume ratio of 3:4:3) as an electrolyte.

### Example 2: Three regions, [(First region (10 %, small-diameter NCM) / Third region (80 %, large-diameter NCM) / Second region (10 %, small-diameter NCM)]

A dry cathode film, a dry cathode, and a lithium battery were prepared following the same process as Example 1, except that the ratio of the width of the first region, the width of the third region, and the width of the second region was changed to 10 : 80 : 10.

### Example 3: Three regions, [(First region (30 %, small-diameter NCM) / Third region (40 %, large-diameter NCM) / Second region (30 %, small-diameter NCM)]

A dry cathode film, a dry cathode, and a lithium battery were prepared following the same process as Example 1, except that the ratio of the width of the first region, the width of the third region, and the width of the second region was changed to 30 : 40 : 30.

### Example 4: Three regions, [(First region (5 %, small-diameter NCM) / Third region (90 %, large-diameter NCM) / Second region (5 %, small-diameter NCM)]

A dry cathode film, a dry cathode, and a lithium battery were prepared following the same process as Example 1, except that the ratio of the width of the first region, the width of the third region, and the width of the second region was changed to 5: 90 : 5.

### Example 5: Three regions, [(First region (35 %, small-diameter NCM) / Third region (30 %, large-diameter NCM) / Second region (35 %, small-diameter NCM)]

A dry cathode film, a dry cathode, and a lithium battery were prepared following the same process as Example 1, except that the ratio of the width of the first region, the width of the third region, and the width of the second region was changed to 35 : 30 : 35.

### Example 6: Five Regions, [First region (small-diameter NCM) / Fourth region (small-diameter NCM + large-diameter NCM) / Third region (large-diameter NCM) / Fifth region (small-diameter NCM + large-diameter NCM) / Second region (small-diameter NCM)]

### Electrode Composition for Forming Fourth Region

Large-diameter LiNi_{0.896}Co_{0.072}Mn_{0.032}O₂ having an average particle diameter (D50) of 14 µm (hereinafter referred to as large-diameter NCM) as a first cathode active material, small-diameter LiNi_{0.896}Co_{0.072}Mn_{0.032}O₂ having an average particle diameter (D50) of 3.5 µm (hereinafter referred to as small-diameter NCM) as a second cathode active material, a carbon conductive material (Denka Black) as a dry conductive material, and polytetrafluoroethylene (PTFE) as a dry binder were mixed in a weight ratio of 51 : 45 : 2 : 2 and loaded in a blade mixer, and then the resulting mixture was subjected to first dry mixing at 25 °C at 900 rpm for 12 minutes, to prepare a fifth mixture in which the cathode active material, the conductive material, and the binder are uniformly mixed. Subsequently, to allow a sufficient fibrilization process of the binder, the fifth mixture was further subjected to second mixing at 25 °C at 4,500 rpm for 22 minutes, to prepare a sixth mixture. No additional solvent was utilized in the preparation of the fifth mixture and the sixth mixture.

### Electrode Composition for Forming Fifth Region

A fifth region-forming electrode composition was prepared following the same process as the fourth region-forming electrode composition.

### Cathode Film Preparation

Using a mixture feeder having 5 compartments separated by partitions, the third region-forming electrode composition (the fourth mixture) was loaded into the middle compartment; the first region-forming composition (the second mixture) and the second region-forming composition (the fourth mixture) were loaded into the two outermost side compartments, respectively; and the fourth region-forming composition (the sixth mixture) and the fifth region-forming composition (the sixth mixture) were loaded into the in-between compartments. The second mixture/sixth mixture/fourth mixture/sixth mixture/second mixture being fed from the mixture feeder were concurrently (e.g., simultaneously) introduced and calendared between a first calendar roll and a second calendar roll of a rolling device, to prepare a dry cathode sheet. The prepared dry cathode sheet was rolled to prepare a dry cathode film. The dry cathode film was a self-standing film free of support. The dry cathode film may have a structure including a first region and a second region, which are respectively adjacent to the two or both (e.g., opposite) side surfaces in a width direction (e.g., transverse direction, TD) perpendicular to a length direction (e.g., machine direction, MD), further including a third region provided in the center and a fourth region provided between the first region and the third region, and further including a fifth region provided between the second region and the third region.

The total width of the dry cathode film was 100 mm, where the width W3 of the third region was 40 mm (40 %), the width W1 of the first region and the width W2 of the second region were each 20 mm (20 %), and the width W4 of the fourth region and the width W5 of the fifth region were each 10 mm (10 %). The thickness T of the dry cathode film was about 100 µm.

### Preparation of Dry Cathode

A dry cathode was prepared following the same process as Example 1.

### Preparation of Lithium Battery

A lithium battery was prepared following the same process as Example 1.

### Example 7: Multilayer Structure, First layer [First Region (small-diameter NCM) / Third region (large-diameter NCM) / Second region (small-diameter NCM)] / Second layer [Sixth region (small-diameter NCM)]

### Dry Multilayer Cathode Film

A first dry cathode sheet including the first region/third region/second region was prepared following the same process as in Example 1, except that the thickness of the dry cathode sheet was altered to about 80 µm by controlling the gap between the calendar rolls.

A second dry cathode sheet composed of the first region was prepared following the same process as in Example 1, except that the first region-forming composition was utilized, a mixture feeder without partitions was utilized, and the thickness of the dry cathode sheet was altered to about 20 µm by controlling the gap between the calendar rolls.

The second dry cathode sheet was provided on the first dry cathode sheet and rolled to prepare a dry cathode film. The dry cathode film was a self-standing film free of support. The dry cathode film had a multilayer structure that includes a first layer including the first region and the second region respectively at the two or both (e.g., opposite) side surfaces thereof and further including a third region provided between the first and second regions and includes a second layer composed of the first region.

### Preparation of Dry Cathode

A dry cathode was prepared following the same process as Example 1. The first layer of the dry cathode film was provided adjacent to the cathode current collector.

### Preparation of Lithium Battery

A lithium battery was prepared following the same process as Example 1.

### Comparative Example 1: One region, [(First region (large-diameter NCM) / Third region (large-diameter NCM) / Second region (large-diameter NCM)]

A dry cathode film, a dry cathode, and a lithium battery were prepared following the same process as in Example 1, except that the dry electrode film was prepared utilizing the third region-forming electrode composition of Example 1 for all of the first region, the second region, and the third region.

### Comparative Example 2: One region, [(First region (Small-diameter NCM) / Third region (Small-diameter NCM) / Second region (Small-diameter NCM)]

A dry cathode film, a dry cathode, and a lithium battery were prepared following the same process as in Example 1, except that the dry electrode film was prepared utilizing the first region-forming electrode composition of Example 1 for all of the first region, the second region, and the third region.

### Comparative Example 3: Wet Cathode

### Preparation of Wet Cathode

LiNi_{0.896}Co_{0.072}Mn_{0.032}O₂ (hereinafter referred to as NCM) having an average particle diameter (D50) of 14 µm as a cathode active material, Denka Black as a dry conductive material, and polytetrafluoroethylene (PTFE) as a conductive binder were mixed in a weight ratio of 96:2:2, and the resulting mixture was mixed with N-methylpyrrolidone (NMP) in an agate mortar to prepare a slurry for forming a cathode active material layer. The slurry was bar-coated on one side of a 12 µm-thick aluminium foil cathode current collector, and dried at room temperature, and dried again under vacuum at 120 °C to thereby introduce a cathode active material layer and prepare a laminate. The prepared laminate was rolled to produce a cathode. The pressure during rolling was 3.0 ton/cm². The thickness of the cathode active material layer of the cathode of Comparative Example 3 was the same as the thickness of the cathode active material layer of the cathode of Example 1.

The step G between a first point of contact between one side surface of the dry cathode film in the width direction and one surface of the dry cathode film in the thickness direction, and a second point of contact between the one side surface and the opposite surface opposite to the one surface, was more than 10 % of the thickness of the cathode active material layer. In some embodiments, during the process of coating a cathode active material layer-forming slurry on the cathode current collector, the slurry sloughed off of both (e.g., simultaneously) side surfaces, and as a result, the side surfaces of a cross-section of the wet cathode active material layer exhibited (e.g., showed) a sloped shape.

### Reference Example 1: Interlayer-Free Dry Cathode

A dry cathode was prepared following the same process as Example 1, except that a 12 µm-thick aluminium thin film, free of a carbon layer as an interlayer, was utilized as a cathode current collector.

The dry cathode active material layer was partially exfoliated from the aluminium foil.

### Preparation of Coin Cells

Because the dry cathode active material layer remained partially exfoliated from the cathode current collector, manufacturing of a coin cell was not proceeded.

### Evaluation Example 1: Measurement of Porosity and Mixture Density of Dry Cathode Film

From the dry cathode films prepared in Examples 1 to 7, Comparative Example 1, and Comparative Example 2, porosities and mixture densities of the respective regions were measured. Each region was separated from the dry cathode films to prepare a sample. Each sample was measured for weight, thickness, and area, and from the composition of constituent components and theoretical density of each sample, porosity and mixture density of each region were calculated. A part of the results of the measurement is shown in Table 1.

**Table 1**

| | Example 1 | Example 6 | Example 7 | Comparative Example 1 | Comparative Example 2 |
|---|---|---|---|---|---|
| First region porosity [vol%] | 19 | 19 | 19 | - | 19 |
| Second region porosity | 19 | 19 | 19 | - | - |
| Third region porosity | 15 | 15 | 15 | 15 | - |
| Fourth region porosity | - | 17 | - | - | - |
| Fifth region porosity | - | 17 | - | - | - |
| Sixth region porosity | - | 19 | 19 | - | - |
| First region mixture density [g/cm³] | 3.30 | 3.30 | 3.30 | - | 3.30 |
| Second region mixture density | 3.30 | 3.30 | 3.30 | - | - |
| Third region mixture density | 3.65 | 3.65 | 3.65 | 3.65 | - |
| Fourth region mixture density | - | 3.80 | - | - | - |
| Fifth region mixture density | - | 3.80 | - | - | - |
| Sixth region mixture density | - | 3.30 | 3.30 | - | - |

As shown in Table 1, in the dry cathode film of Example 1, the porosity of each of the first and second regions respectively on or at the two or both (e.g., opposite) side surfaces was higher than the porosity of the third region provided between the first region and the second region.

The porosity of each of the first and second regions on both (e.g., simultaneously) side surfaces in Examples 2 to 5 was also higher than the porosity of the third region provided between the first region and the second region.

As shown in Table 1, in the dry cathode film of Example 1, the first and second regions respectively at the two or both (e.g., opposite) side surfaces showed the highest porosity, the third region provided in the center showed the lowest porosity, and the fourth and fifth regions provided in-between showed a porosity that is higher than the porosity of the third region and lower than the porosity of each of the first and second regions. The dry cathode film of Example 6 included a porosity gradient in which the porosity decreases in a stepwise manner from the first region at one side surface, through the fourth region, up to the third region.

In Example 7, the first and second regions respectively at the two or both (e.g., opposite) side surfaces of the first layer each showed a porosity higher than the porosity of the third region provided therebetween, and the sixth region in the second layer showed a porosity higher than the porosity of the third region.

The dry cathode films of Comparative Example 1 and Comparative Example 2 showed a constant porosity throughout the respective regions.

### Evaluation Example 2: Evaluation of Vertical Binding Force of Cathode Active Material Layer (I)

Using a SAICAS (SAICAS EN-EX, Daipla Wintes, JAPAN), adhesive characteristics of the cathode active material layers included in the cathodes prepared in Example 1 and Comparative Example 3 were analyzed. The test was performed on the third region of the cathode of Example 1.

With a 1 mm-wide diamond blade, a constant speed analysis was performed to measure a vertical binding force (Fv) according to depth (clearance angle = 10°; rake angle = 20°; shear angle = 45°; horizontal velocity = 4 µm/s; and vertical velocity = 0.4 µm/s).

First, a first constant speed analysis was performed from a first position on the surface of the composite cathode active material included in the first region, to the surface of the cathode current collector, and then the cathode active material layer was removed by moving the blade horizontally along the surface of the cathode current collector. Then, at a position moved back by 10 µm from the first position, a second constant-speed analysis was performed under the same conditions as the first constant-speed analysis. The data obtained from the second constant-speed analysis were utilized.

In the cathode active material layer, a vertical binding force of the cathode active material layer was measured, and the measured data were normalized to binding force graph areas to derive a vertical relative binding force (F_{VR}) of the cathode active material layer according to depth.

The data measured from a section between a first position, which is 5 % away from the surface of cathode active material layer, and a second position, which is 5 % away from the surface of the electrode current collector with respect to the total thickness of the cathode active material layer, were utilized for the vertical binding force of the cathode active material layer. In some embodiments, data near the surface of cathode active material layer and the surface of electrode current collector were excluded in order to avoid measurement errors.

Using Equation 1, a change in vertical relative-binding force (F_{VR}) was calculated from the derived vertical relative binding force (F_{VR}) data of the cathode active material layer. CVhange in Vertical Relative Binding Force (FVR) = [(Maximum Vertical Relative Binding Force - Minimum Vertical Relative Binding Force) / Minimum Vertical Relative Binding Force] × 100

The measurement shows that the change in vertical relative binding force of the cathode active material layer in the dry cathode of Example 1 was 200 % or less. It was found that the cathode active material layer of Example 1 has a substantially uniform binding force and composition distribution regardless of the location in the thickness direction.

In some embodiments, it was found that in the wet cathode of Comparative Example 3, the change in vertical binding force in the cathode active material layer was more than 300 %. It was found that the cathode active material layer of Comparative Example 3 has a binding force and composition distribution that significantly vary depending on the location in the thickness direction.

### Evaluation Example 3: Evaluation of Horizontal Binding Force of Cathode Active Material Layer (II)

Using a SAICAS (SAICAS EN-EX, Daipla Wintes, JAPAN), adhesive characteristics of the cathode active material layers included in the cathodes prepared in Example 1 and Comparative Example 3 were analyzed. The test was performed on the third region of the cathode of Example 1.

With a 1 mm-wide diamond blade, constant speed analysis was performed to measure a horizontal binding force (F_{H}) according to depth (clearance angle = 10°; rake angle = 20°; shear angle = 45°; horizontal velocity = 4 µm/s; and vertical velocity = 0.4 µm/s).

First, a first constant speed analysis was performed from a first position on the surface of the composite cathode active material included in the first region, to the surface of the cathode current collector, and then the cathode active material layer was removed by moving the blade horizontally along the surface of the cathode current collector. Then, at a position moved back by 10 µm from the first position, a second constant-speed analysis was performed under the same conditions as the first constant-speed analysis. The data obtained from the second constant-speed analysis were utilized.

A first horizontal binding force (F_{H1}) was measured at a first position, which is 10 % away from the surface of the cathode active material layer, and a second horizontal binding force (F_{H2}) was measured at a second position, which is 10 % away from the surface of the cathode current collector, with respect to the total thickness of the cathode active material layer.

A ratio of horizontal binding force between the first position and the second position is defined by Equation 2. Horizontal Binding Force Ratio Between First Position and Second Position (%) = [FH2/FH1] × 100

Measurements showed that in the dry cathode of Example 1, the horizontal relative binding force ratio of the cathode active material layer was more than 70 %. In some embodiments, in the wet cathode of Comparative Example 3, the horizontal relative binding force ratio of the cathode active material layer was less than 40 %.

The horizontal binding force ratio of the cathode active material layer of Example 1 was higher than that of the cathode active material layer of Comparative Example 3.

It was confirmed that the cathode active material layer of Example 1 has a more substantially uniform binding force and composition distribution, compared to the cathode active material layer of Comparative Example 3.

### Evaluation Example 4: Evaluation of Room-temperature High-Rate Capability

The lithium batteries prepared in Examples 1 to 7 and Comparative Examples 1 to 3 were each charged at a constant current of 0.1 C rate at 25 °C until the battery voltage reached 4.3 V (vs. Li) and then, the charging was cut-off at a current of 0.05 C rate while maintaining 4.3 V in a constant voltage mode. Subsequently, the battery was discharged at a constant current rate of 0.1 C until the battery voltage reached 2.8 V (vs. Li) during discharge (formation cycle).

The lithium batteries after the formation cycle were each charged at a constant current of 0.2 C rate at 25 °C until the battery voltage reached 4.3 V (vs. Li) and then, the charging was cut-off at a current of 0.05 C rate while maintaining 4.3 V in a constant voltage mode. Subsequently, each lithium battery was discharged at a constant current rate of 0.2 C until the battery voltage reached 2.8 V during discharge (1^{st} cycle).

The lithium batteries after the 1^{st} cycle were each charged at a constant current of 0.2 C rate at 25 °C until the battery voltage reached 4.3 V (vs. Li) and then, the charging was cut-off at a current of 0.05 C rate while maintaining 4.3 V in a constant voltage mode. Subsequently, each lithium battery was discharged at a constant current of 0.5 C rate until the battery voltage reached 2.8 V (vs. Li) during discharge (2^{nd} cycle).

The lithium batteries after the 2^{nd} cycle were each charged at a constant current of 0.2 C rate at 25 °C until the battery voltage reached 4.3 V (vs. Li) and then, the charging was cut-off at a current of 0.05 C rate while maintaining 4.3 V in a constant voltage mode. Subsequently, the lithium batteries were each discharged at a constant current of 1.0 C rate until the battery voltage reached 2.8 V (vs. Li) during discharge (3^{rd} cycle).

Throughout the charge-discharge cycles, a rest period of 10 minutes was provided after each charge/discharge cycle. A part of the room-temperature charge-discharge test results is shown in Table 2. High-rate capability is defined by Equation 3. High-Rate Capability [%] = [Discharge Capacity at 1.0 C rate (Discharge Capacity in 3rd cycle)/Discharge Capacity at 0.2 C rate (Discharge Capacity in 1st cycle)] × 100

**Table 2**

| | High-Rate Capability [%] |
|---|---|
| Example 1, [(First region (20 %, small-diameter NCM) / Third region (60 %, large-diameter NCM) / Second region (20 %, small-diameter NCM)] | 94.0 |
| Example 2, [(First region (10 %, small-diameter NCM) / Third region (80 %, large-diameter NCM) / Second region (10 %, small-diameter NCM)] | 94.2 |
| Example 3, [(First region (30 %, small-diameter NCM) / Third region (40 %, large-diameter NCM) / Second region (30 %, small-diameter NCM)] | 94.9 |
| Example 4, [(First region (5 %, small-diameter NCM) / Third region (90 %, large-diameter NCM) / Second region (5 %, small-diameter NCM)] | 93.5 |
| Example 5, [(First region (35 %, small-diameter NCM) / Third region (30 %, large-diameter NCM) / Second region (35 %, small-diameter NCM)] | 95.3 |
| Example 6, [First region (small-diameter NCM) / Fourth region (small-diameter NCM + large-diameter NCM) / Third region (large-diameter NCM) / Fifth region (small-diameter NCM + large-diameter NCM) / Second region (small-diameter NCM)] | 95.2 |
| Example 7, Multilayer Structure, First layer: [(First region (10 %, small-diameter NCM) / Third region (80 %, large-diameter NCM / Second region (10 %, small-diameter NCM)] / Second layer: [(First region (100 %, small-diameter NCM)] | 95.0 |
| Comparative Example 1, [(Third region (100 %, large-diameter NCM)] | 91.0 |
| Comparative Example 2, [(First region (100 %, small-diameter NCM)] | 93.9 |
| Comparative Example 3, Wet Cathode (Third region 100 %, large-diameter NCM) | 90.0 |

As shown in Table 2, the lithium batteries of Examples 1 to 7 show improved high-rate capability compared to the lithium batteries of Comparative Examples 1 and 3.

It was found that the lithium batteries of Examples 1 to 7 due to increased porosity respectively at the two or both (e.g., opposite) side surfaces have improved electrolyte immersion properties, and thus show improved high-rate capability compared to the lithium batteries of Comparative Examples 1 and 3, which had an overall low porosity.

The lithium battery of Comparative Example 2, due to only including the small-diameter cathode active material, was found to have excellent or suitable high-rate capability, but poor lifespan characteristics as shown in Evaluation Example 5 and Table 3.

### Evaluation Example 5: Evaluation of Room-Temperature Cycling Performance

The lithium batteries prepared in Examples 1 to 7 and Comparative Examples 1 to 3 were each charged at a constant current of 0.1 C rate at 25 °C until the voltage reached 4.4 V (vs. Li) and then, the charging was cut-off at a current of 0.05 C rate while maintaining a constant voltage mode at 4.4 V. Subsequently, each lithium battery was discharged at a constant current of 0.1 C rate until the battery voltage reached 2.8 V (vs. Li) during discharge (formation cycle).

Each lithium battery after the formation cycle was charged at 25 °C at a constant current of 0.5 C rate until the battery voltage reached 4.4 V (vs. Li). Subsequently, each lithium battery was discharged at a constant current of 0.5 C rate until the battery voltage reached 2.8 V (vs. Li) during discharge, and this cycle was repeated under the same conditions up to the 100^{th} cycle (repeated 100 times).

Throughout the charge-discharge cycles, a rest period of 10 minutes was provided after each charge/discharge cycle. Capacity retention ratio in the 100^{th} cycle is defined by Equation 4. A part of the room-temperature cycling test results is shown in Table 3. Capacity Retention Ratio [%] = [Discharge Capacity in 100th cycle/Discharge Capacity in 1st cycle] × 100

**Table 3**

| | Capacity Retention Ratio [%] |
|---|---|
| Example 1, [(First region (20 %, small-diameter NCM) / Third region (60 %, large-diameter NCM) / Second region (20 %, small-diameter NCM)] | 95.2 |
| Example 2, [(First region (10 %, small-diameter NCM) / Third region (80 %, large-diameter NCM) / Second region (10 %, small-diameter NCM)] | 95.4 |
| Example 3, [(First region (30 %, small-diameter NCM) / Third region (40 %, large-diameter NCM) / Second region (30 %, small-diameter NCM)] | 96.1 |
| Example 4, [(First region (5 %, small-diameter NCM) / Third region (90 %, large-diameter NCM) / Second region (5 %, small-diameter NCM)] | 95.9 |
| Example 5, [(First region (35 %, small-diameter NCM) / Third region (30 %, large-diameter NCM) / Second region (35 %, small-diameter NCM)] | 96.3 |
| Example 6, [First region (small-diameter NCM) / Fourth region (small-diameter NCM + large-diameter NCM) / Third region (large-diameter NCM) / Fifth region (small-diameter NCM + large-diameter NCM) / Second region (small-diameter NCM)] | 96.8 |
| Example 7, Multilayer Structure, First layer: [(First region (10 %, small-diameter NCM) / Third region (80 %, large-diameter NCM) / Second region (10 %, small-diameter NCM)] / Second layer: [(First region (100 %, small-diameter NCM)] | 96.9 |
| Comparative Example 1, [(Third region (100 %, large-diameter NCM)] | 94.5 |
| Comparative Example 2, [(First region (100 %, small-diameter NCM)] | 94.6 |
| Comparative Example 3, Wet Cathode (Third region 100 %, large-diameter NCM) | 94.1 |

As shown in Table 3, the lithium batteries of Examples 1 to 7 show improved lifespan characteristics compared to the lithium batteries of Comparative Examples 1 to 3.

Poor lifespan characteristics of the lithium battery of Comparative Example 1 was considered to be caused by an increased internal resistance of the lithium battery due to including the dry cathode film with decreased porosity.

Poor lifespan characteristics of the lithium battery of Comparative Example 2 was considered to be caused by increased side reactions due to an excessively increased contact area between the cathode active material and the electrolyte due to including only the small-diameter cathode active material.

It was considered that the lithium battery of Comparative Example 3, due to including a wet cathode that shows a relatively high binder content (e.g., amount) near the surface of the cathode active material layer, had a relatively increased internal resistance near the surface of the cathode active material layer, which results in decreased reversibility of electrode reactions and deteriorated lifespan characteristics of the lithium battery.

According to one aspect, a dry electrode film, by having improved porosity respectively at the two or both (e.g., opposite) side surfaces thereof, can have improved electrolyte immersion properties.

In one or more embodiments, a dry electrode, by including a dry electrode film having improved electrolyte immersion properties, can have improved reversibility of electrode reactions during charging and discharging of the dry electrode.

In one or more embodiments, by including a dry electrode film having improved electrolyte immersion properties, a lithium battery can have improved cycling performance.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the drawings, it will be understood by those of ordinary skill in the art that one or more suitable changes in form and details may be made therein without departing from the scope of the present disclosure as defined by the following claims and equivalents thereof.

Embodiments are set out in the following clauses:
Clause 1. A dry electrode film comprising:
   a first region having a first side surface disposed at one end of a width direction perpendicular to a thickness direction of the dry electrode film and comprising a first dry electrode active material layer;
   a second region having a second side surface opposing the first side surface and comprising a second dry electrode active material; and
   a third region disposed between the first region and the second region and comprising a third dry electrode active material,
   wherein the third region has a third porosity less than a first porosity of the first region and a second porosity of the second region.
Clause 2. The dry electrode film of clause 1,
   wherein
   the first region has a first width, from the first side surface to a first interface between the first region and the third region,
   the second region has a second width, from the second side surface to a second interface between the second region and the third region, and
   the third region has a third width between the first interface and the second interface,
   wherein the third width of the third region is greater than the first width W1 of the first region and the second width of the second region.
Clause 3. The dry electrode film of clause 1,
   wherein
   a third width of the third region is about 30 % to about 95 % with respect to a total width of the dry electrode film, and
   a first width of the first region and a second width of the second region are each independently about 2.5 % to about 35 % with respect to the total width of the dry electrode film.
Clause 4. The dry electrode film of any one of clauses 1 to 3,
   wherein
   a first width of the first region and a second width of the second region are each greater than a thickness of the dry electrode film,
   wherein a ratio W1/T of the first width of the first region to the thickness of the dry electrode film is about 10 to about 10,000, and
   a ratio W2/T of the second width of the second region to the thickness of the dry electrode film is about 10 to about 10,000.
Clause 5. The dry electrode film of any one of clauses 1 to 4,
   wherein the dry electrode film comprises a first top surface disposed at one end in the thickness direction of the dry electrode film, and a second top surface opposing the first top surface, and
   wherein, in the width direction of the dry electrode film, a step between a first point of contact between the first top surface and the first side surface, and a second point of contact between the second top surface and the first side surface is 30 % or less with respect to a thickness of the dry electrode film.
Clause 6. The dry electrode film of any one of clauses 1 to 5,
   wherein the porosity decreases in a stepwise manner or a continuous manner in a direction from the first side surface or the second side surface to an interface of the third region, or
   the porosity decreases in a stepwise manner or a continuous manner in a direction from the first side surface or the second side surface to a central portion of the third region.
Clause 7. The dry electrode film of any one of clauses 1 to 6,
   wherein
   the first region has a first porosity gradient that decreases in a width direction from the first side surface to a first interface between the first region and the third region,
   the second region has a second porosity gradient that decreases in a width direction from the second side surface to the third region, or
   the first region has a first porosity gradient that decreases in a width direction from the first side surface to the third region, and the second region has a second porosity gradient that decreases in a width direction from the second side surface to the third region.
Clause 8. The dry electrode film of any one of clauses 1 to 7,
   wherein
   the dry electrode film has a third porosity gradient, which decreases in a width direction from the first side surface to a central portion of the third region,
   the dry electrode film has a fourth porosity gradient, which decreases in a width direction from the second side surface to a central portion of the third region, or
   the dry electrode film has a third porosity gradient, which decreases in a width direction from the first side surface to a central portion of the third region, and a fourth porosity gradient, which decreases in a width direction from the second side surface to the central portion of the third region.
Clause 9. The dry electrode film of any one of clauses 1 to 8,
   wherein
   the third dry electrode active material has the same composition as the first dry electrode active material and the second dry electrode active material, or
   the third dry electrode active material has a different composition from at least one of the first dry electrode active material and the second dry electrode active material.
Clause 10. The dry electrode film of any one of clauses 1 to 9,
   wherein
   an average particle diameter of the third dry electrode active material is larger than an average particle diameter of the first dry electrode active material and an average particle diameter of the second dry electrode active material, or
   a content of the third dry electrode active material in the third region is higher than a content of the first dry electrode active material in the first region and a content of the second dry electrode active material in the second region.
Clause 11. The dry electrode film of any one of clauses 1 to 10,
   wherein a mixture density of the third region is higher than a mixture density of the first region and a mixture density of the second region.
Clause 12. The dry electrode film of any one of clauses 1 to 11,
   wherein
   the dry electrode film has a third side surface disposed at one end of a length direction perpendicular to the width direction and has a fourth side surface opposing the third side surface, and
   the third region includes at least a portion of each of the third side surface and the fourth side surface.
Clause 13. The dry electrode film of any one of clauses 1 to 12, further comprising:
   at least one of a fourth region and a fifth region, the fourth region being disposed between the first region and the third region, and the fifth region being disposed between the second region and the third region,
   wherein the fourth region has a fourth porosity that is less than a first porosity of the first region and greater than a third porosity of the third region, and the fifth region has a fifth porosity that is less than a second porosity of the second region and greater than the third porosity of the third region.
Clause 14. The dry electrode film of any one of clauses 1 to 13,
   wherein the dry electrode film comprises a first layer, the first layer including the first region, the second region, and the third region, and
   the dry electrode film further comprises a second layer disposed on the first layer, the second layer including a sixth region,
   wherein the sixth region has a sixth porosity, which is greater than a third porosity of the third region.
Clause 15. The dry electrode film of any one of clauses 1 to 14,
   wherein
   the dry electrode film is a self-standing film, and
   the dry electrode film comprises a dry binder,
   wherein
   the dry binder comprises a fibrillized binder,
   the dry binder comprises a binder fibrillized in a length direction of the dry electrode film,
   the dry binder comprises a fluorinated binder,
   the dry binder has a glass transition temperature (T_{g}) of about 15 °C to about 100 °C, and
   a content of the dry binder with respect to a total weight of the dry electrode film is about 0.1 wt% to about 5 wt%.
Clause 16. The dry electrode film of any one of clauses 1 to 15, further comprising:
   a dry conductive material,
   wherein the dry conductive material comprises a carbon-based conductive material,
   wherein the carbon-based conductive material comprises a fibrous carbon-based material having an aspect ratio of 10 or more, a particulate carbon-based material having an aspect ratio of 5 or less, or a combination thereof, and
   wherein a content of the dry conductive material with respect to a total weight of the dry electrode film is about 0.1 wt% to about 5 wt%.
Clause 17. A dry electrode comprising:
   a dry electrode active material layer; and
   an electrode current collector disposed on one side of the dry electrode active material layer, or disposed between the one side and the other side opposing the one side, wherein the dry electrode active material layer comprises the dry electrode film of any one of clauses 1 to 16.
Clause 18. The dry electrode of clause 17,
   wherein the electrode current collector comprises a base film and a metal layer disposed on one side or both sides of the base film,
   wherein the base film comprises a polymer, the polymer comprising polyethylene terephthalate (PET), polyethylene (PE), polypropylene (PP), polybutylene terephthalate (PBT), polyimide (PI), or a combination thereof, and
   wherein the metal layer comprises indium (In), copper (Cu), magnesium (Mg), titanium (Ti), iron (Fe), cobalt (Co), nickel (Ni), zinc (Zn), aluminum (Al), germanium (Ge), lithium (Li), or an alloy thereof.
Clause 19. The dry electrode of clause 17 or clause 18, further comprising:
   an interlayer disposed between the electrode current collector and the dry electrode active material layer,
   wherein the interlayer comprises a carbon-based conductive material, a binder, or a combination thereof.
Clause 20. A lithium battery comprising:
   a cathode;
   an anode; and
   an electrolyte disposed between the cathode and the anode,
   wherein at least one of the cathode and the anode is a dry electrode,
   wherein the dry electrode comprises the dry electrode film of any one of clauses 1 to 16.

## Claims

1. A dry electrode film comprising:
a first region having a first side surface at one end of a width direction perpendicular to a thickness direction of the dry electrode film and comprising a first dry electrode active material;
a second region having a second side surface opposite to the first side surface and comprising a second dry electrode active material; and
a third region between the first region and the second region and comprising a third dry electrode active material,
wherein the third region has a third porosity less than a first porosity of the first region and less than a second porosity of the second region.

2. The dry electrode film as claimed in claim 1,
wherein
the first region has a first width, from the first side surface to a first interface between the first region and the third region,
the second region has a second width, from the second side surface to a second interface between the second region and the third region, and
the third region has a third width between the first interface and the second interface, and
wherein the third width of the third region is greater than the first width of the first region and greater than the second width of the second region.

3. The dry electrode film as claimed in claim 1,
wherein
a third width of the third region is about 30 % to about 95 % with respect to a total width of the dry electrode film, and
a first width of the first region and a second width of the second region are each independently about 2.5 % to about 35 % with respect to the total width of the dry electrode film.

4. The dry electrode film as claimed in any one of claims 1 to 3,
wherein
a first width of the first region and a second width of the second region are each greater than a thickness of the dry electrode film,
a ratio W1/T of the first width of the first region to the thickness of the dry electrode film is about 10 to about 10,000, and
a ratio W2/T of the second width of the second region to the thickness of the dry electrode film is about 10 to about 10,000.

5. The dry electrode film as claimed in any one of claims 1 to 4,
wherein the dry electrode film comprises a first top surface at one end in the thickness direction of the dry electrode film, and a second top surface opposite to the first top surface, and
wherein, in the width direction of the dry electrode film, a step between a first point of contact between the first top surface and the first side surface, and a second point of contact between the second top surface and the first side surface is 30 % or less with respect to a thickness of the dry electrode film.

6. The dry electrode film as claimed in any one of claims 1 to 5,
wherein
a porosity of the dry electrode film decreases in a stepwise manner or a continuous manner in a direction from the first side surface or the second side surface to an interface of the third region, or
the porosity of the dry electrode film decreases in a stepwise manner or a continuous manner in a direction from the first side surface or the second side surface to a central portion of the third region.

7. The dry electrode film as claimed in any one of claims 1 to 6,
wherein
the first region has a first porosity gradient that decreases in a width direction from the first side surface to a first interface between the first region and the third region,
the second region has a second porosity gradient that decreases in a width direction from the second side surface to the third region, or
the first region has a first porosity gradient that decreases in a width direction from the first side surface to the third region, and the second region has a second porosity gradient that decreases in a width direction from the second side surface to the third region.

8. The dry electrode film as claimed in any one of claims 1 to 7,
wherein
the dry electrode film has a third porosity gradient, which decreases in a width direction from the first side surface to a central portion of the third region,
the dry electrode film has a fourth porosity gradient, which decreases in a width direction from the second side surface to a central portion of the third region, or
the dry electrode film has a third porosity gradient, which decreases in a width direction from the first side surface to a central portion of the third region, and a fourth porosity gradient, which decreases in a width direction from the second side surface to the central portion of the third region.

9. The dry electrode film as claimed in any one of claims 1 to 8,
wherein
a composition of the third dry electrode active material is the same as a composition of the first dry electrode active material and a composition of the second dry electrode active material, or
the composition of the third dry electrode active material is different from at least one of the composition of the first dry electrode active material or the composition of the second dry electrode active material.

10. The dry electrode film as claimed in any one of claims 1 to 9,
wherein
an average particle diameter of the third dry electrode active material is larger than an average particle diameter of the first dry electrode active material and larger than an average particle diameter of the second dry electrode active material, or
an amount of the third dry electrode active material in the third region is higher than an amount of the first dry electrode active material in the first region and higher than an amount of the second dry electrode active material in the second region.

11. The dry electrode film as claimed in any one of claims 1 to 10,
wherein a mixture density of the third region is higher than a mixture density of the first region and higher than a mixture density of the second region.

12. The dry electrode film as claimed in any one of claims 1 to 11,
wherein:
(i) the dry electrode film has a third side surface at one end of a length direction perpendicular to the width direction and has a fourth side surface opposite to the third side surface, and
the third region comprises at least a portion of each of the third side surface and the fourth side surface; and/or
(ii) the dry electrode film further comprises:
at least one of a fourth region and a fifth region, the fourth region between the first region and the third region, and the fifth region between the second region and the third region,
wherein the fourth region has a fourth porosity that is less than the first porosity of the first region and greater than the third porosity of the third region, and the fifth region has a fifth porosity that is less than the second porosity of the second region and greater than the third porosity of the third region; and/or
(iii) the dry electrode film comprises a first layer, the first layer comprising the first region, the second region, and the third region,
wherein the dry electrode film further comprises a second layer on the first layer, the second layer comprising a sixth region, and
wherein the sixth region has a sixth porosity, which is greater than the third porosity of the third region; and/or
(iv) the dry electrode film is a self-standing film, and
the dry electrode film comprises a dry binder, and
wherein
the dry binder comprises a fibrillized binder,
the fibrillized binder comprises a binder fibrillized in a length direction of the dry electrode film,
the dry binder comprises a fluorinated binder,
the dry binder has a glass transition temperature (T_{g}) of about 15 °C to about 100 °C, and
an amount of the dry binder with respect to a total weight of the dry electrode film is about 0.1 wt% to about 5 wt%; and/or
(v) the dry electrode film further comprises:
a dry conductive material,
wherein the dry conductive material comprises a carbon-based conductive material,
wherein the carbon-based conductive material comprises a fibrous carbon-based material having an aspect ratio of 10 or more, a particulate carbon-based material having an aspect ratio of 5 or less, or a combination thereof, and
wherein an amount of the dry conductive material with respect to a total weight of the dry electrode film is about 0.1 wt% to about 5 wt%.

13. A dry electrode comprising:
a dry electrode active material layer; and
an electrode current collector on a first side of the dry electrode active material layer, or between the first side and a second side opposite to the first side, wherein the dry electrode active material layer comprises the dry electrode film as claimed in any one of claims 1 to 12.

14. The dry electrode as claimed in claim 13,
wherein:
(i) the electrode current collector comprises a base film and a metal layer on at least one side of the base film,
wherein the base film comprises a polymer, the polymer comprising polyethylene terephthalate (PET), polyethylene (PE), polypropylene (PP), polybutylene terephthalate (PBT), polyimide (PI), or a combination thereof, and
wherein the metal layer comprises indium (In), copper (Cu), magnesium (Mg), titanium (Ti), iron (Fe), cobalt (Co), nickel (Ni), zinc (Zn), aluminium (Al), germanium (Ge), lithium (Li), or an alloy thereof; and/or
(ii) the dry electrode further comprises:
an interlayer between the electrode current collector and the dry electrode active material layer,
wherein the interlayer comprises a carbon-based conductive material, a binder, or a combination thereof.

15. A lithium battery comprising:
a cathode;
an anode; and
an electrolyte between the cathode and the anode,
wherein at least one of the cathode and/or the anode is a dry electrode, and
wherein the dry electrode comprises the dry electrode film as claimed in any one of claims 1 to 12.
